# EUROPEAN PATENT APPLICATION

(11) **EP 4 564 245 A1**
(43) Date of publication of application: **04.06.2025**
(21) Application number: 24205815.4
(22) Date of filing: 10.10.2024
(51) Int. Cl.: G06Q 10/02, B60L 1/00, B60L 53/30, B60L 53/60, B60L 53/66, B60L 53/68, B60L 58/12, G06Q 50/40, G06Q 50/43, G06Q 50/47, H04W 4/02, H04W 4/40

(54) **METHODS AND SYSTEMS FOR PROVIDING CONTROL IN RELATION TO ON-DEMAND FLEET WITH ELECTRIC VEHICLES**

(30) Priority: 01.12.2023 US 202363605244 P; 21.03.2024 US 202418612663
(71) Applicant: BluWave Inc., Ottawa, ON K2K 2A9 (CA)
(72) Inventor: GALBRAITH, Christopher, Ottawa, K2K 2A9 (CA); GREEN, Keegan Michael John, Ottawa, K2K 2A9 (CA); GUN, Kaan Turker, Ottawa, K2K 2A9 (CA); TRIPLET, Thomas, Ottawa, K2K 2A9 (CA); SEDAGHATI, Sahar, Ottawa, K2K 2A9 (CA); PAUL, Devashish, Ottawa, K2K 2A9 (CA); LINCHIEH, Alexander, Ottawa, K2K 2A9 (CA)
(74) Representative: Forresters IP LLP

(57) **Abstract**

Systems and methods for providing control in relation to electric vehicles (EVs) in an on-demand fleet of vehicles are provided. An on-demand fleet receives requests for trips that are unscheduled, which creates challenges for the fleet operator in managing and controlling fleet vehicles. A system receives information relating to EVs in the fleet and trip demand information, and provides control in relation to the fleet including generating control information based on the EV and trip demand information. The control information includes EV charging schedule information including indications of EVs to perform charging during a given time interval. The control information is transmitted for use by computing devices associated with the EVs for use in controlling the EVs.

## Description

### REFERENCE TO RELATED APPLICATIONS

This application claims the benefit of, or priority to, United States Provisional Patent Application No. 63/605,244 filed December 1, 2023, and to United States Patent Application No. 18/612,663 filed March 21, 2024, which are incorporated herein by reference.

### FIELD

The present disclosure relates generally to systems, apparatuses, and methods for providing control in relation to electric vehicles (EVs) and fleets of EVs.

### BACKGROUND

Operators of vehicle fleets face increased demand and incentives to transition to EVs, reduce energy costs, and reduce greenhouse gas (GHG) emissions, all while being expected to continue providing reliable services. However, existing solutions are not necessarily conducive to achieving these objectives and constraints. Amid climate concerns, rising energy costs, and increased demand for EVs, improvements are desired.

### BRIEF DESCRIPTION OF DRAWINGS

Example embodiments of the present disclosure will now be described with reference to the attached Figures.
FIG. 1 is a diagram of an example geographical region with roads, EVs, and chargers.
FIG. 2 is a simplified block diagram of an example system comprising an EV fleet control system and a fleet comprising EVs.
FIG. 3 is a block diagram of an example system comprising an EV fleet control system and a fleet comprising EVs.
FIG. 4 is a diagram representing a SOC of a battery of an EV and indicating lower and upper SOC thresholds.
FIG. 5 is an example heat map showing predicted trip demand information, locations and service status of EVs in an on-demand fleet, and locations of chargers in the region.
FIG. 6 is an example graphical user display showing some status information of some EVs in an on-demand fleet.
FIG. 7 is an example graphical user display showing some status and statistical information relating to EVs in an on-demand fleet.
FIG. 8 is a process flow diagram of an example method.
FIG. 9 is a block diagram of an example computerized device or system that may be used in implementing one or more aspects or components of an embodiment according to the present disclosure.

### DETAILED DESCRIPTION

This disclosure generally relates to improvements in EV control technologies, including systems, apparatuses, and methods for providing control in relation to EVs and fleets of EVs, including on-demand fleets.

Among the various classes of commercial vehicle fleets, on-demand fleets face a distinct set of challenges when onboarding and integrating EVs into their operations. An on-demand fleet generally refers to a fleet that receives requests for at least some trips or other services that are unscheduled or unplanned from the perspective of the fleet. A common example of this class of fleet is a taxi fleet that provides predominantly on-demand, meaning unscheduled, transportation services to the public. While many such services do support advance booking, on-demand service requests typically provide little to no advance notice and often constitute the majority of their business. The unscheduled nature of the trip requests creates challenges for controlling and managing a fleet relative to other fleets that operate some or most of their vehicles based on a predefined schedule. Other related classes of fleet include but are not limited to vehicles used for ride sharing (for example Uber^{™}, Lyft^{™}), and on-demand delivery services (for example UberEats^{™}).

Some typical challenges associated with the transition from internal combustion engine vehicles (ICEVs) to EVs apply to on-demand fleets. These may include one or more of the typically long duration of EV charging sessions (often an hour or more to completely charge) compared to refueling of an ICEV (a process of a few minutes); the transition from the relatively stable cost structure of contract fuel purchases to the more volatile commodity prices of electricity (which vary significantly and quickly in most markets); the balancing of electrical loads from charging at a fleet depot site with other electricity use at the site; the design, installation, and maintenance of chargers and supporting electrical infrastructure upgrades at fleet depot sites; balancing cost-efficiency with capacity to meet the fleet's energy demands; and the often shorter and more variable effective EV operating range relative to ICEVs, influenced by external factors (for example ambient temperature) and operating conditions (for example effective driver use of regenerative braking), and requiring more careful planning of service activities.

On-demand fleets often face the additional challenge of handling the above-listed electrification challenges (which may economically penalize operators that do not plan effectively or manage their schedules and energy use carefully) in the context of a highly-variable operating schedule based on immediate customer demand for service, in which the next service activity of a given vehicle may only become known minutes or seconds in advance. Currently, no solution exists for optimized control of operations of an EV fleet relating to control of charging patterns and/or energy use (considering consumption during charging and/or expenditure in mobile operations) of an on-demand fleet with a highly variable (primarily on-demand) operating schedule.

EVs may be operated in conjunction with ICEVs, constituting a mixed fleet. Drivers may be paid on a commission basis to directly incentivize generation of revenue for the fleet, and in the case of a taxi fleet may primarily respond to taxi customer demand (real or perceived) to determine when and where they work. The drivers may be accustomed to operating ICEVs with longer range and shorter refueling times than their EVs, and the taxi company's operations may not be properly optimized for the use of EVs in their mixed fleet. Without a solution to optimize how energy is provided to (for example through charging) and used by the EVs in the fleet, driver behavior, including charging behavior, may be reactive in nature, possibly based on a subjective perception of current demand conditions, and may not account well for upcoming customer demand and possibly other conditions. A result is that the operation of the EV fleet will likely be less successful in terms of achieving one or more objectives, for example in terms of minimizing the use of public or fast chargers, maximizing the use of EVs over ICEVs, maximizing revenue or profit for the fleet or individual EVs or drivers, and so on. In the context of EV operations, factors that may reduce a likelihood of being successful in terms of achieving one or more objectives may be worsened by driver behaviors, for example in relation to charging, that are based on drivers' perceptions rather than being optimized based on data.

Some consequences of the current state of affairs may include one or more of the following. One consequence may be slow response to increased customer demand as drivers try to coordinate their charging sessions and movements through ad-hoc approaches. Another consequence may be potential taxi customer demand going unaddressed because an EV taxi is unavailable while charging, resulting in loss of revenue that could have been captured by the EV. Another consequence may be reduced average EV operating revenue for the fleet operator and reduced commissions for the driver. Another consequence may be longer wait times for taxi customers choosing EV taxis if availability and response time are sub-optimal. Another consequence may be higher fuel costs than could otherwise be achieved by the taxi fleet operator, as their ICEVs may have to drive more distance to compensate for underutilized EVs. Another consequence may be slower return on investment of EVs for fleet operators and costly supporting infrastructure due to underutilization. Another consequence may be driver reluctance to adopt EVs over ICEVs if they feel their commissions may be lower. Another consequence may be operator reluctance to adopt EVs if they are perceived as having inferior profitability. Another consequence may be higher reliance on DC fast charging to support the energy needs of the fleet operating reactively, which may result in one or more of higher energy costs at fleet depot sites that include these chargers, higher cost of installation and maintenance for upgraded charging infrastructure to serve fast charging at depot sites, higher cost to use fast public chargers, dramatically reduced EV battery lifespan, and increased long-term cost of vehicle ownership due to more frequent battery replacements.

In an aspect, the present disclosure relates to systems and methods pertaining to control of operations of an EV fleet including an on-demand fleet. Again, an on-demand fleet generally refers to a fleet that receives requests for at least some trips or other services that are unscheduled or unplanned from the perspective of the fleet. The unscheduled nature of trip requests creates challenges for controlling and managing a fleet, including with EVs, relative to other fleets that operate some or most of their vehicles based on a predefined schedule. The control may involve performing optimizations in relation to the operations of the fleet. The control may pertain to control of charging of the EVs or energy use by the EVs. In addition, the control may be based on information that is predicted, forecasted, or estimated, which are referred to herein simply as prediction information for simplicity. In addition, the present disclosure provides systems and methods that may address or alleviate one or more of the deficiencies in previous systems described above.

In an aspect, the present disclosure provides an EV fleet control system, which may include an optimizer and, optionally, one or more predictors. In the case of having predictor(s), some or all of their predicted outputs may be fed into the optimizer among its inputs. In some embodiments, an optimizer itself may be configured to perform predictions or to effectively perform predictions. Additionally, the system may acquire some third party prediction information externally from the system. An optimization is generally performed in relation to one or more objectives, and the optimization may determine optimal or efficient actions for the EVs, the EV charging infrastructure, or any other assets.

An EV fleet control system may optimize controllable variables affecting the operations of the fleet and thus the energy use of its EVs. An indication of when, where, and/or how to charge an EV are examples of such controllable variables in a system in which EV charging is optimized. An indication of which EV trips should be fulfilled by which EVs is an example of controllable variables that indirectly rather than directly affect the energy use of EVs in the fleet, but may still be optimized by the system. The system may optimize the controllable variables toward maximizing or minimizing one or more objective quantities, such as maximizing the number of EV trips fulfilled, maximizing the distance driven by EVs compared ICEVs, maximizing the revenue or profit earned by the EVs or by the whole fleet, and so on. The system may then put the optimized values of the variables into practice directly through control information, for example using fleet software or equipment, and/or indirectly through recommendations or instructions to individuals such as fleet staff or EV drivers. The system may perform optimizations periodically at a defined frequency or at any other time intervals.

The EV fleet control system may automatically predict other uncontrolled variables, meaning variables which may not be directly or easily controlled but may still affect the operation of the fleet at future times (and/or at the current time if the variables are not directly measurable). Uncontrolled variables are not necessarily EV-specific, since ICEV operations within a mixed fleet can affect the operations of its EVs. Customer demand for EV trips and time-variant state of charge (SOC) of EVs are examples of uncontrolled variables that may be predicted or estimated. Such values may be predicted by one or more predictors of the system or may be received externally by the system. Predictions, often referred to herein as prediction information, may be consumed as inputs by the optimizer or controller of the system, which in turn may produce a set of outputs which are dispatched to a receiving actor or carried out through direct control of other systems or assets.

An EV fleet control system may be configured for rapid calculation of actions on a frequent and periodic basis in response to scenarios that may vary unpredictably over time. Inputs to the optimization process may include real metrics (for example direct, near-real-time inputs from a sensor) in addition to values predicted by predictors. The speed and frequency at which prediction and optimization functionalities are performed may be on very short timescales compared to the rate at which drivers and fleet operators make (or are able to make) operational decisions.

Generally, an EV fleet control system may be capable of outperforming traditional fleet operation/management approaches in the accuracy or timeliness of its outputs, potentially due in part to one or more of its adaptability to changing conditions, objective use of information including historical information and/or current state information of the fleet at any given time, or its automated processing of relevant information.

The EV fleet control system may utilize a collection and storage of data relevant to revenue fleet operations for a number of uses. Again, these can pertain to ICEVs in a mixed fleet as their operations can affect that of the fleet's EVs. The data may be used, for example, for one or more of formulation of models (including quantitative models, for machine-learning-based predictors and optimizers, and qualitative models describing the operating constraints and processes of the fleet), for the actuation of outputs based on the state of the systems and assets, and optionally for training of prediction and optimization models. The system may include interfaces for user interactions including provision of information relevant to the system, reading of the system and fleet status, and/or receipt of instructions from the system.

The outputs of an optimization may be applied to the direct control of fleet systems or assets (for example, through actuation of a smart charger) or may be acted on indirectly by communicating a preferred action to another entity (for example, through an instruction to charge transmitted to a driver or EV). It is noted that mentions in the present disclosure of instructions or other information being communicated to a driver generally include the instructions or other information being communicated or otherwise provided to an electronic or computing device to which a driver has access, for instance a smartphone or other device associated with the driver and/or a device onboard an EV.

The teachings according to the present disclosure may be applied and implemented in various different fields and applications. For example, the present disclosure may be applied to on-demand EV applications, such as taxis, or to any other suitable transit applications, for instance fleets that transport people such as buses, vans, aircraft, trains, ships, and so on. Another example may be delivery applications, for example last-mile delivery which generally involves the "last leg" of a journey involving transit of passengers or goods from a hub to final destinations, for example moving airline passengers between an airport terminal and airliner. Another example is a vehicle depot or other site of operation with other suitable electrical assets; for example a warehouse with fully-automated wheeled robots in which the locations and times at which they recharge must be balanced with the locations and times at which goods must be moved around to fulfill a service. These foregoing examples are not comprehensive. The present disclosure may be applied in many other fields and applications. Accordingly, while various example embodiments and features are described in relation to taxis and taxi fleets, this is not limiting.

In addition, according to an aspect, the present disclosure relates to on-demand fleets. In at least some embodiments, a fleet comprises a plurality of EVs. In at least some embodiments, a fleet may comprise EVs and one or more other types of vehicles or assets, for example ICEVs. Thus, references herein to a fleet and to an EV fleet are meant to include fleets having EVs and possibly other types of vehicles, including but not limited to ICEVs. Thus, references to a fleet and to an EV fleet, and related features, are not limited to fleets consisting only of EVs, unless specifically indicated.

The terms "prediction" and "predictor" are generally used herein for simplicity to include forecasts and forecasters, and estimates and estimators. Although, in some instances, the terms forecast and forecaster may be used, for example "weather forecast" and so on. In addition, the terms "status" and "state" are generally used interchangeably.

The term "fleet" is used generally herein. It may refer to a group of vehicles of an organization, such as a taxi company, a transit company, a delivery company, and so on. However, the term also includes one or more vehicles that are associated with one another in some way, and not necessarily all associated with one organization.

According to an aspect, the present disclosure provides a system, comprising: a computer-readable storage medium having executable instructions; and one or more computer processors configured to execute the instructions to provide control in relation to operations of an on-demand vehicle fleet comprising at least a plurality of electric vehicles (EVs), wherein the on-demand vehicle fleet receives requests for at least some trips that are unscheduled, the instructions to: receive EV information relating to EVs in the fleet; receive trip demand information comprising demand information for unscheduled trips; and provide control in relation to operations of the on-demand vehicle fleet, wherein the providing control comprises: generating control information based on the EV information and the trip demand information, wherein the control information comprises EV charging schedule information comprising an indication of one or more specific EVs to perform charging during a given time interval; and transmitting the control information for use by computing devices associated with respective EVs for use in controlling of the EVs.

In at least some embodiments, the control information comprises, in relation to a specific EV to perform charging during a given time interval, at least one of: an identification of a charger to use for the charging; and an identification of a geographic area in which the specific EV is to perform charging.

In at least some embodiments, the instructions are further to: receive or generate prediction information relating to a predicted amount of energy required for an EV to complete a specific trip; assess whether the EV has sufficient energy to complete the trip based on SOC information of the EV; and generate in response to an assessment that the EV does not have sufficient energy, an indication in the control information not authorizing the EV to perform the trip, and generate, in response to an assessment that the EV has sufficient energy, an indication in the control information authorizing the EV to perform the trip.

In at least some embodiments, the instructions are further to set a lower state of charge (SOC) threshold based on the trip demand information, and wherein the generating control information comprises generating an indication of an EV to perform charging on the basis that a SOC of the EV is below the lower state of charge (SOC) threshold.

In at least some embodiments, the instructions are further to: receive feedback information associated with one or more specific EVs in response to prior control information transmitted in association with those EVs, the feedback information comprising an indication of a level of compliance with the prior control information, and wherein the generating control information for a future time period is performed based on the feedback information.

In at least some embodiments, the control information comprises an identification of a geographic area in which an EV is recommended to await a future trip.

In at least some embodiments, the trip demand information includes trip demand prediction information relating to predicted trip demand.

In at least some embodiments, the generating control information comprises performing a receding horizon optimization for an optimization horizon having a plurality of time intervals, wherein the given time interval of the indication is associated with one of the plurality of time intervals.

According to an aspect, the present disclosure provides a method comprising: at one or more electronic devices each having one or more processors and computer-readable memory, to provide control in relation to operations of an on-demand vehicle fleet comprising at least a plurality of electric vehicles (EVs), wherein the on-demand vehicle fleet receives requests for at least some trips that are unscheduled: receiving EV information relating to EVs in the fleet; receiving trip demand information comprising demand information for unscheduled trips; and providing control in relation to operations of the on-demand vehicle fleet, wherein the providing control comprises: generating control information based on the EV information and the trip demand information, wherein the control information comprises EV charging schedule information comprising an indication of one or more specific EVs to perform charging during a given time interval; and transmitting the control information for use by computing devices associated with respective EVs for use in controlling of the EVs.

In at least some embodiments, the control information comprises, in relation to a specific EV to perform charging during a given time interval, at least one of: an identification of a charger to use for the charging; and an identification of a geographic area in which the specific EV is to perform charging.

In at least some embodiments, a method comprises: receiving or generating prediction information relating to a predicted amount of energy required for an EV to complete a specific trip; assessing whether the EV has sufficient energy to complete the trip based on SOC information of the EV; and generating in response to an assessment that the EV does not have sufficient energy, an indication in the control information not authorizing the EV to perform the trip, and generating, in response to an assessment that the EV has sufficient energy, an indication in the control information authorizing the EV to perform the trip.

In at least some embodiments, a method further comprises: setting a lower state of charge (SOC) threshold based on the trip demand information, and wherein the generating control information comprises generating an indication of an EV to perform charging on the basis that a SOC of the EV is below the lower state of charge (SOC) threshold.

In at least some embodiments, a method further comprises: receiving feedback information associated with one or more specific EVs in response to prior control information transmitted in association with those EVs, the feedback information comprising an indication of a level of compliance with the prior control information, and wherein the generating control information for a future time period is performed based on the feedback information.

In at least some embodiments, the control information comprises an identification of a geographic area in which an EV is recommended to await a future trip.

In at least some embodiments, the trip demand information includes trip demand prediction information relating to predicted trip demand.

In at least some embodiments, the generating control information comprises performing a receding horizon optimization for an optimization horizon having a plurality of time intervals, wherein the given time interval of the indication is associated with one of the plurality of time intervals.

According to an aspect, the present disclosure provides a non-transitory computer-readable medium having computer-readable instructions stored thereon, the computer-readable instructions executable by at least one processor to cause the performance of operations relating to providing control in relation to operations of an on-demand vehicle fleet comprising at least a plurality of electric vehicles (EVs), wherein the on-demand vehicle fleet receives requests for at least some trips that are unscheduled, the operations comprising: receiving EV information relating to EVs in the fleet; receiving trip demand information comprising demand information for unscheduled trips; and providing control in relation to operations of the on-demand vehicle fleet, wherein the providing control comprises: generating control information based on the EV information and the trip demand information, wherein the control information comprises EV charging schedule information comprising an indication of one or more specific EVs to perform charging during a given time interval; and transmitting the control information for use by computing devices associated with respective EVs for use in controlling of the EVs.

In at least some embodiments, the control information comprises, in relation to a specific EV to perform charging during a given time interval, at least one of: an identification of a charger to use for the charging; and an identification of a geographic area in which the specific EV is to perform charging.

In at least some embodiments, the operations further comprise setting a lower state of charge (SOC) threshold based on the trip demand information, and wherein the generating control information comprises generating an indication of an EV to perform charging on the basis that a SOC of the EV is below the lower state of charge (SOC) threshold.

In at least some embodiments, the operations further comprise: receiving or generating prediction information relating to a predicted amount of energy required for an EV to complete a specific trip; assessing whether the EV has sufficient energy to complete the trip based on SOC information of the EV; and generating in response to an assessment that the EV does not have sufficient energy, an indication in the control information not authorizing the EV to perform the trip, and generating, in response to an assessment that the EV has sufficient energy, an indication in the control information authorizing the EV to perform the trip.

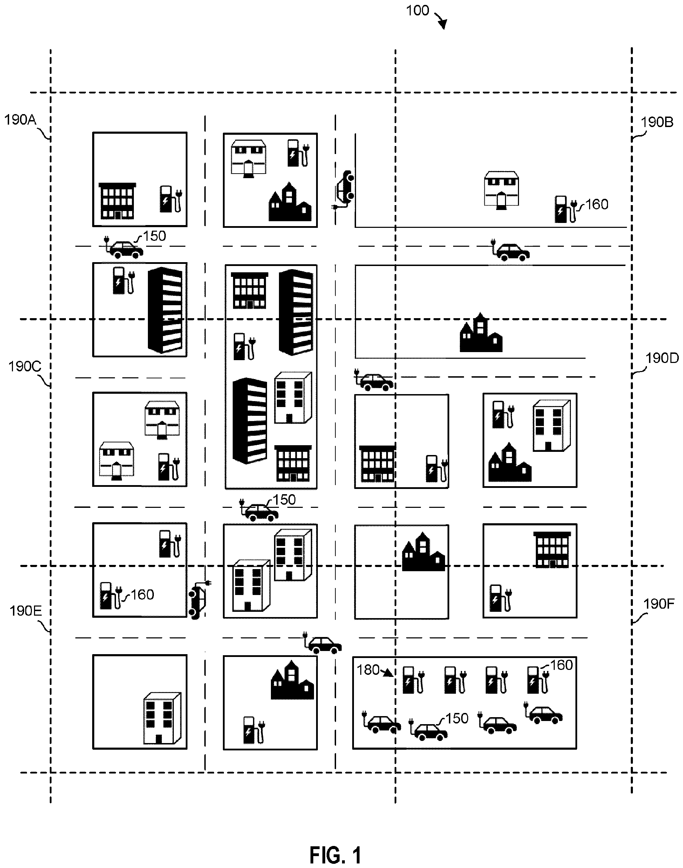

**FIG. 1** is a diagram of an example geographical region 100 with roads, EVs 150, and chargers 160. A charger 160 is generally a physical interface for providing a transfer of energy between a power source, such as a power grid, and an EV. Region 100 also comprises a vehicle depot 180, which may be a taxi depot where taxis, including EVs, may be stored, charged, and maintained. Geographical region 100 may represent where a fleet normally operates and may be subdivided into geographic areas 190A, 190B, 190C, 190D, 190E, and 190F. The shapes and sizes of these areas may be somewhat arbitrary in this example. Shapes and sizes of geographic areas in other embodiments may be different. The subdivision of a region into areas may be useful in controlling EVs and other assets in the fleet.

Areas 190A and 190C-F may be considered urban regions since they are more densely populated with roads and buildings, while area 190B may be considered a rural region since it is less densely populated with roads and buildings. Urban areas may be more likely to have EV chargers and to have a higher number of them compared to rural areas.

Information and operations of a fleet with EVs may be based on geographic areas in which the fleet operates. For example, historic trip demand information, current trip demand information, or predicted trip demand information may be divided by geographic area. In addition, control information for controlling EVs in a fleet may include instructions or recommendations for specific EVs to charge within certain geographic areas, or identifications of certain geographic regions in which specific EVs are recommended to await future trips, and so on.

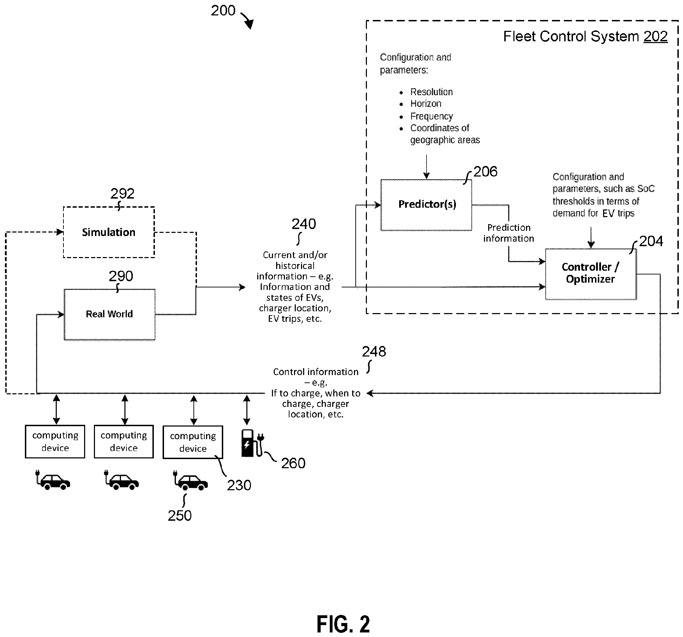

**FIG. 2** is a simplified block diagram of an example system 200 comprising an EV fleet control system 202 and a fleet comprising EVs 250. In a taxi or rideshare application, a customer may request a ride in any suitable way, for example by submitting a request via a computing device that communicates with a taxi or rideshare company system, or by telephoning the company. A request may be processed, for example by a dispatcher, which may assign the trip to a specific vehicle, or possibly send a request to several vehicles with the expectation that a vehicle will accept the request.

EV fleet control system 202 may comprise a controller 204, which may generally provide control in relation to an on-demand EV fleet. Controller 204 may comprise one or more optimizers for optimizing in relation to one or more objectives. In general, an optimizer may take any suitable form, and be or include any suitable module, program, machine, subsystem, algorithm, technique, and so on, that is configured to perform some kind of optimization(s) or improvement(s) in relation to one or more objectives. In addition, EV fleet control system 202 may comprise one or more predictors 206 that generate prediction information of any suitable types. Prediction information may be used by controller 204 to generate control information for operations of the EV fleet.

Control may include providing control information for use by EVs in the fleet or other controllable assets, chargers, or other components. Control information may include actions to be taken by the assets, or recommendations for actions to the assets. For ease of reference, actions or recommendations may be referred to collectively herein simply as "actions" but is to be interpreted to include both unless indicated otherwise or results in some obvious inconsistency. Example actions or recommendations include EV charging schedule information, which may include indications for specific EVs of when to charge (for example at a specific time or during a time period or interval), where to charge (for example an identification or indication of a specific charger or a specific geographic area known or assumed to have one or more chargers), how to charge (for example a charging rate), and so on. Further example actions or recommendations include trips to be assigned to specific EVs, routes or trips to be driven by specific EVs, and assignment of EVs to specific chargers.

The term "connector" is used herein to refer a physical interface of electric vehicle supply equipment (EVSE) that connects the EVSE with an EV. The term "charger" is used herein to generally refer to a single EVSE, which may have one or more connectors. Charging instructions may direct EVs to charge at a specific connector or charger, or to charge in a region without directly specifying the charger or connector to be used.

Controller 204 may generally generate control information, for example to control or optimize how energy is provided to (for example through charging) and used by the EVs in the fleet. As previously noted, without such control, EV driver behavior may be reactive in nature, possibly based on a subjective perception of current demand conditions, and may not account well for upcoming customer trip demand and possibly other conditions. As a result, the operation of the EV fleet will likely be less successful in terms of achieving one or more objectives, for example in terms of minimizing the use of public or fast chargers, maximizing the use of EVs over ICEVs, maximizing revenue or profit for the fleet or individual EVs or drivers, and so on. In contrast, according to the present disclosure, controller 204 generates control information that may replace or supplement driver behavior and decision making at least in relation to certain decisions in relation to on-demand fleets so that at least some control in relation to the EVs and fleet is based on optimized data and decisions instead of, for example, on driver perceptions and behavior.

Controller 204 may comprise one or more optimizers for performing optimizations related to providing control of the EV fleet. The optimizer may optimize an aspect of how the fleet operates toward one or more objectives. Some example types of objectives include minimizing wait times for fleet customers, minimizing use of fast chargers, minimizing carbon emissions due to EV charging, maximizing total distance driven by EVs in a mixed fleet of EVs and ICEVs, and so on.

The results of an optimization may comprise or may be used to generate control information 248, for example comprising actions, recommendations, instructions, suggestions, or options for assets in the system, for example EVs 250 in the fleet. The control information 248 may be provided, transmitted, or made available to, or for use by, specific computing devices 230 associated with specific EVs, for example a driver's mobile device or an onboard computing device in the EV. A computing device may output control information visually, audibly, or otherwise for a person such as the driver. Control information 248 may be provided to or for other assets in the system 200, for example charging infrastructure such as EV chargers 260. For example, control information may be provided to a computing device that may control operations of a charger, whether the computing device is located at the charger or located remotely. Such a computing device is considered to be associated with an EV, for example when the EV is physically connected to the charger (for example by being plugged-in or otherwise coupled with charger). In addition, the description of control information being transmitted to a computing device generally includes any ways of making the control information available to the computing device, such as providing, sending, transmitting or otherwise making available the control information to the computing device.

In addition, predictor 206 or optimizer 204 may take in parameters or other configuration information (in addition to its input data) that may define, constrain, or otherwise influence their function.

Furthermore, inputs 240 to controller 204, and possibly also predictor 206, may include any suitable types of information from any suitable sources. Example types of input information includes SOC information of EVs, location information of EVs, whether EVs are idle or are conducting trips, location information of chargers, trip demand information, and so on. Example inputs include historical information, current information, or predicted information. Predicted information may include information from predictor 206 and/or external or third party prediction information (for example weather forecasts from a weather service).

An optimization that is used for generating actions may benefit from using not only current or real-time information or historical information, but also predicted information.

Predictor 206 may generate prediction information of any suitable types, for example predictions relating to one or more of trip demand, available revenue, cost of charging, customer wait times, traffic conditions, weather conditions, and so on. Prediction information generated by predictor 206 may be provided as input to controller 204 with a potential goal of improving the accuracy of the optimizations or improving other control decisions.

EV control system 202 may use real information and data from real assets as input. This may be referred to as real world information 290. In some embodiments, EV control system 202 may use simulated information and data from simulated assets as input. This information may be generated by simulations of fleet operations. This may be referred to as simulated information 292. Simulated information may be used for model training (for example for an optimizer model, a predictor model, etc.), testing, or scenario evaluation. In some embodiments, system 202 may use as input both real world information and simulated information.

Parameters of an optimizer may be trained to optimum values by running the optimizer in a simulation of fleet operations (which may be analogous to a "training set" of data in machine learning terminology) using different sets of parameter values. A set of parameter values that results in an optimal metric of performance, or a composition of multiple metrics of performance, over the course of the "training set" may be selected for use in the optimizer. In some embodiments, this may require that the performance on a separate "test set" is comparable to performance on a training set. This higher-level optimization process may be similar to hyperparameter tuning, which is a commonly used technique in machine learning.

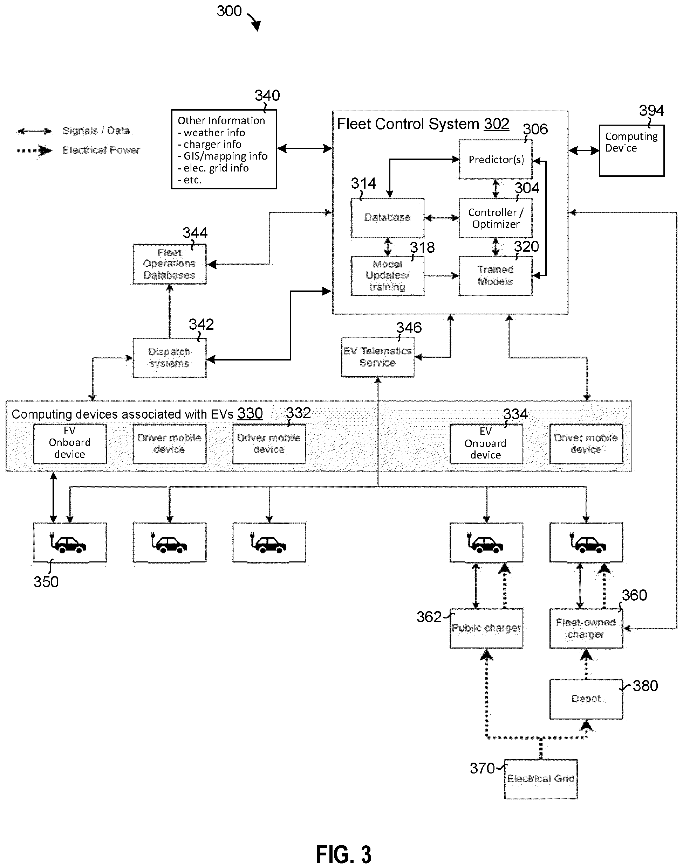

**FIG. 3** is a block diagram of an example system 300 comprising an EV fleet control system 302 and a fleet comprising EVs 350.

EV fleet control system 302 may comprise one or more of a controller 304, which may include an optimizer for performing optimizations for providing control in relation to the EV fleet, similar to the controller in FIG. 2, one or more predictors 306, a database 314 for storing any suitable information, one or more training modules 318, for example to train an optimizer model for controller 304 or a predictor model for predictor 306, and a trained models module 320 for storing trained models.

Input information to EV fleet control system 302 may include any suitable types of information from any suitable sources.

Controller 304 may generate control information for providing control in relation to operations of the on-demand EV fleet. An optimizer may generate a solution to an optimization problem, possibly in the form of numerical values for each decision variable in the optimization problem. These values may then be used to generate control information, for example comprising actions or recommendations, for assets in the system, for example EVs 350 in the fleet. The control information may be provided to, or for use by, specific computing devices 330 associated with specific EVs, for example a driver's mobile device 332 or an onboard computing device 334 on the EV. The control information may be provided to or for other assets in the system 300, for example charging infrastructure such as fleet-owned or associated EV chargers 360 or other chargers 362 such as chargers that are available to use by the public. One or more fleet-owned or associated chargers 360 may be located at a fleet depot 380 or at any other location.

EV fleet control system 302 may communicate with one or more other components, including those shown in FIG. 3 such as computing devices 330, 332, 334, chargers 360, 362, fleet operations database 344, dispatch system 342, EV telematics service 334, computing device 394, sources of information 340, and so on, in any suitable ways, including over any suitable communication channel, connection, or network, which may be wired or wireless, and which may include the Internet. In general, for simplicity, references herein to the internet include other communication networks and communication channels other than the internet. Furthermore, FIG. 3 shows some example data or signal connections between components or subsystems in solid lines, and also shows some example electrical power connections in dashed lines.

Predictor 306 may generate prediction information, which may be provided to controller 304. Predictor 306 may generate prediction information of any suitable types, for example predictions relating to one or more of trip demand (number of trips per hour for example), EV energy required to conduct a specific trip, available revenue, customer wait times, and so on. Predictions relating to specific EVs may take into account information about those specific EVs, such as EV status information or any other information about the EVs, such as vehicle type, average energy consumption per unit of distance (for example kilometer), and so on. Predictor 306 may aggregate a set of predicted values into a combined metric, for example predicted trip demand for an entire city, summed or averaged from that of its neighborhoods. As previously noted, prediction information, including that generated by predictor 306, may be provided as input to controller 304 with a potential goal of improving the accuracy of the optimizations.

Some other example types of prediction information include customer demand or available revenue, cost of charging at a given time and location, cost of energy in general or at sites managed by the fleet operator, ratio of energy sources or carbon content of energy used for charging, degradation of an EV battery as a result of charging and discharging, time for a charging EV to reach a given state of charge, travel time for a vehicle to reach a given location, distance driven by ICEVs as a result of an EVs having to charge, load on electrical grids providing energy to chargers that the fleet may use, for example grid 370, demand for energy market services, capacity to provide energy market services, and so on.

Further examples of types of prediction information include electrical grid power demand, EV charging demand, EV battery SOC information, EV availability, aggregate EV availability, weather information, traffic information, and so on. A predictor may predict SOC of the batteries of EVs, for example based on historical information such as EV charging patterns, EV user behavior, and inference based on time of week, time of day, and time of year, and so on.

A predictor may aggregate information or work with aggregated information in any suitable fashion, for example to make predictions that are generalized for the future rather than overly specific to the past. For example, a predictor for predicting trip demand, such as taxi demand, earnable trip revenue, and so on, may take information about historical trips and aggregate them (count them, sum their revenue, etc.) by geographical area and time of day. In doing so, data previously associated with specific trips at specific times and coordinates becomes more general, therefore more generalizable to the future and more usable as predictions. For example, knowing that ten downtown trips occurred yesterday between 10:00 and 11:00 AM can be more practically useful for inferring today's demand than knowing those historical trips' exact coordinates and times. Trip information may relate to trips that have been requested by customers, and may include or be limited to trips that have also been fulfilled by the EVs and/or possibly ICEVs. The trips may be streamed into a database or recorded in some other way. The trip information may be generated or modified by fleet control system 302 in some cases, such as to compensate for incomplete data sets.

Although not shown in FIG. 3, system 302 may comprise a data processor, which may perform data cleaning, data warehousing or other operations on received data. Data received by the data processor may be cleaned, conditioned, or otherwise modified. The data processor may transform data into a format more suitable for machine learning techniques, such as supervised learning. The data from the data processor may be provided to another component, such as database 314 or controller 304.

Information relating to individual trips may include, but is not limited to, when (for example a date or time) and/or where (for example, in terms of geographical coordinates or area) the trip was requested. The time may be used for predictions and the location may be optionally used in at least some embodiments. Some of the information may be approximated if not directly available. In addition, information about each trip may include how much revenue or profit is associated with the trip, which may be useful if predicting earnable trip revenue or profit or similar.

In addition, predictor 306 may take in parameters or other configuration information (in addition to its input data) that may define, constrain, or otherwise influence the function of the predictor. Example types of configuration information that may be provided to a predictor include resolution (for example the length of time intervals for which predictions are made, for instance for each 1 hour time interval, or 15 min, 30 min, 2 hours, 4 hours, 12 hours, or any other duration), horizon (for example the length of a prediction horizon window, for instance for the next 24 hours, which may consist of one or more time intervals and need not begin at the current time, or of any other duration such as 12 hours, 48 hours, one week, and so on), frequency (for example how often prediction information is generated, for instance making prediction value(s) every day at 8:00 AM), or coordinates or other information of geographic areas in a region in which an EV fleet operates. For example, a predictor for trip demand may predict every day at 8:00 AM the number of trips expected to be requested in each hour until 8:00 AM the next day. However, this is merely an example and in other embodiments these parameters may be different, for example to use a finer or coarser resolution at certain times of day, different sized horizons, different frequencies, and so on.

Configuration information may be obtained in any suitable manner, including via computing device 394, which may be used by an operator of the fleet.

Predictor 306 may be implemented using any suitable model or technique, or combination thereof, for example a machine learning model, a time-series persistence model, rules-based, or any other suitable approaches.

In at least one embodiment, a persistence model may use historically observed values as predicted values, with configurable rules surrounding temporal factors such as time of year, day of week, time of day, etc. which may be designed to model how the collective behavior of humans (including taxi passengers) changes in patterns that are yearly, weekly, daily, etc. For example, with day-of-week and time-of-day rules, a persistence-based predictor may use available historical values from the latest available / previous Saturday as predicted values for the portion of the prediction horizon that overlaps with a Saturday, knowing that similar behaviors are consistently observed on Saturdays but that the latest Saturday will be most representative. Similarly, at 8:00 AM on a Monday, a persistence-based predictor may create a 24-hour prediction for the hourly amount of earnable revenue based on the hourly amount of revenue earned on the previous weekday (Friday) from 8:00 AM to midnight, as well as the hourly amount of revenue earned so far on the Monday from its midnight to now (8:00 AM); each hourly value would come from the same hour on a prior day.

A predictor, for example for predicting trip demand or earnable trip revenue, may subdivide its prediction by or among geographical areas within a region serviced by the fleet. Geographical areas may have any suitable shape such as squares, rectangles, hexagons, and so on. Geographical areas may be devised according to whether a given area is urban or rural, or downtown, suburbs, and so on. In some embodiments, areas may partly or fully tessellate, meaning they fit together for full coverage of a wider region. For example, predictions may be made for the number of trips expected to be requested in different areas of a greater metropolitan region served by a taxi company. Such predictions may be configured with the wider region, the number of areas to subdivide the region into, the coordinate centers of each area, the size of each area, and/or the shape of each area. However, rigidly defined geographical areas can introduce an inaccuracy when more trips occur in a geographical area than in its neighboring geographical area, and when those trips are close to the border between the two areas. Due to rigidly defined geographical areas, all of the trips occurring in the first geographical area will be associated entirely and only to that area, even though they are very close to the neighboring geographical area. In at least some embodiments, geographical areas may not be rigidly defined, or smoothing or interpolation may be done between geographical areas. Such approaches may avoid the aforementioned inaccuracy and support the generalization of historical trips to future times without having to bin them rigidly by geographical region. One method that does not use rigid geographical areas, as an example, may represent geographical areas more loosely using probability distributions. In other words, each area may have a weighting assigned to each geographical point, representing the probability of, for example, a trip being requested at that point being included in the given geographical area versus a different one.

Another method that does not use rigid geographical areas is the use of the mathematical concept of kernel density estimators (KDEs). KDEs are commonly used to generate a univariate probability density function (PDF) that is a continuous version of a statistical histogram plot, based on how data points are distributed along the x-axis. However, a system according to the present disclosure may use KDEs to generate a continuous multivariate PDF based on how trips are distributed geographically, for example in terms of latitude and longitude. As part of generating a forecast, the predictor may integrate the multivariate PDF over a rigid geographical area to obtain an accurate approximation for the number of trips in that geographical area without having the aforementioned inaccuracy. While a trip may be represented by a specific location, the use of KDEs may effectively spread out each trip among the geographical areas to avoid associating it with any one geographical area. A system may alternatively or additionally use the PDF without integrating it to compare its relative values at different locations, for example to compare the demand around different chargers.

While the two aforementioned methods have been described for avoiding rigidly defined geographical areas and their potential inaccuracies, such methods may be additionally or alternatively applied to avoid rigidly defined time blocks and their similar potential inaccuracies. For example, the aforementioned PDF which may be a function of latitude and longitude may be additionally or solely a function of time as a continuous variable. Furthermore, predictor 306 may make predictions of other types of information based on geographic areas.

Input to predictor 306 may include any suitable types of information, and may comprise information similar to the input information described in relation to controller 304 and optimizer.

Controller 304 of fleet control system 302 may generate and output control information for providing control in relation to operations of the EV fleet. Controller 304 may generate signals providing or indicating the control information and the signal may be communicated to EVs and potentially to other assets and/or the signal may be provided to one or more computing devices 330 for providing control to the EVs. The control information may generally include control actions or recommendations, including for EVs.

In at least some embodiments, control information may include EV charging schedule information, which may include charging related actions or recommendations, such as indications of specific EVs to begin charging, when to start charging, when to stop charging, an identification of a charger to use for charging, an identification of a geographic area in which an EV is to perform charging which may not include an identification of any specific charger (for example an indication may be to charge in a specific area or neighborhood, and may know or assume that the area has available chargers, so that a specific charger is not specified), time periods during which to charge and not charge, a charging rate (for example charging current) to be used for charging, a specific charger(s) that may be used, an identification of a geographic area in which an EV is recommended to await a future trip (for example a taxi being in a particular neighborhood or other geographic area), a charging schedule, which source(s) of power to use to charge EVs, and so on.

Other example types of control information includes where EVs should go in terms of routes, when or how an EV is charged via charger over time, which may involve optimizing an amount of power flow into each plugged-in EV over time, an identification of which specific trips should be fulfilled by which EVs, an identification of how EVs should travel and/or fulfill trips for example in terms of route, speed, timing, and so on. In relation to an identification of which specific trips should be fulfilled by which EVs, in at least some embodiments, indicating to a low-SoC EV to avoid fulfilling a trip may effectively be done by indicating to that EV to charge. Similarly, indicating to a low-SoC EV to avoid longer trips may effectively be accomplished by indicating to that EV to charge within a certain timeframe.

In at least some embodiments, generating control information may comprise attempting to determine if a given EV has a sufficient SOC to accept and complete a specific trip request. For example, a request for a trip is received by the system, which may then consider one or more EVs that may be available to accept the trip. This may involve determining which EVs are idle, for example meaning EVs that are currently in service but are not currently conducting a trip or not performing essential charging. The system may generate prediction information for the amount of energy that will be required to perform the trip. This may include a general prediction that, for example, utilizes an average or baseline amount of energy used per unit of distance traveled by an EV. The prediction may also use a distance value, for example a total distance covered by the trip. In addition, the prediction may be more specific in that it is based on additional information, for example based on information of each candidate EV, such as type of EV, or average energy consumption per unit distance for that specific EV or type or category of EV. In some cases, this may involve generating multiple predictions possibly for the different candidate EVs. In addition, the prediction may be based on additional information such as weather conditions, traffic conditions, route information (for example flat or hilly), etc.

For the trip request, the system may use the prediction information to assess whether a specific EVs has sufficient energy in its battery, for example via SOC or other metric, to perform the trip. In addition, the system may take into account a prediction or estimation of an amount of energy required for the EV to go from its current location to the start location of the trip (for example the location where the customer is picked up). If the EV is assessed to have sufficient energy, then the system may, for example, assign the trip to the EV or may approve or authorize the EV to accept or perform the trip. If the EV is assessed to not have sufficient energy, then the system may, for example, not authorize or prohibit the EV from accepting or performing the trip, or may warn the EV that it does not have sufficient energy to complete the trip, or assign the EV to another potential trip that would require less energy. In addition, information relating to the state of the fleet may be updated based on the assessment and/or prediction information.

The features and operations relating to assessing whether an EV has sufficient energy to perform a specific trip, and so on, enable the system to more efficiently and optimally handle the on-demand nature of the trip requests received by a fleet. For example, many of the in-service EVs are on the road, meaning away from an EV depot or from a charger, and thus the SOCs of EVs will vary widely with some having high SOC, some with medium SOC, and some with low SOC. The EVs may accept new trips in this condition. This can differ notably to other fleets that are not on-demand since vehicles in fleets that operate somewhat or mostly on schedules may be located at a depot before beginning service and thus may be able to charge up to a sufficient SOC before departing to begin service. A planning tool for the fleet may thus plan out most or all routes for all vehicles before the vehicles begin service, and so these vehicles are often not accepting new trips while out on the road while in service. Accordingly, energy usage and energy remaining for vehicles in such fleets while on the road during service are often not a main concern.

The fleet control system 302 may predict an amount of charge needed for a next trip that a given EV may perform, and may determine whether that EV will be able to complete the trip and optionally whether the EV should charge or accept or wait for a shorter trip that requires less energy. The system's knowledge of the state of the fleet may be updated accordingly.

The controller or optimizer may generate control information for each time interval between the current time and a horizon of time into the future, thereby following a receding-horizon scheme which may be defined by the duration of each time interval and the duration between the current time and the time horizon. As a mere example, control information may be generated for the next hour, 24 hours, 48 hours, one week, or at any other values, at a resolution of 30 minutes, 1 hour, 4 hours, 12 hours, or at any other values. For instance, control information may be generated for the next 7 days and may include control information for each 4 hour period within the 7 day horizon. Control information may be generated for some or all EVs or other assets in each time interval in a time horizon, and the control information may be updated in the next time interval, and so on. In a receding-horizon scheme, the controller or optimizer is able to plan ahead based on `best' available information about what will happen in the future; as the next time interval becomes the current time interval, the control or optimization is performed again and can take advantage of more accurate predictions that have since been made, and of information that has become observed rather than predicted. The iterative process may repeat indefinitely, thereby making use of the `best' available information at the time while only taking actions for the time interval between iterations.

The control information may be provided for use by, or to, EVs 350, computing devices 330 associated with EVs, charging infrastructure such as chargers 360, 362, and so on. In some embodiments, control information may be provided to a fleet operations database 344 which may store short-term operating data or long-term records in connection with a fleet dispatch system 342, or to a fleet dispatch system 342, which may provide some organization or facilitation relating to dispatching EVs in response to requests for trips, for example systems that prepare and organize incoming requests for trips from potential customers and present them to an operator who determines which vehicles to assign the trip activities to. Fleet dispatch system 342 may communicate with EVs 350 and/or devices 330 associated with EVs to provide control information and potentially other dispatch related information.

In some cases, depending on the configuration, control information may be provided to a computing device onboard an EV or at charging infrastructure, which may cause the EV or charging infrastructure to take one or more specific actions. These actions may be performed at least in some situations without any human intervention or involvement. In other situations, some user input may be prompted or received, which may initiate, stop or otherwise influence the action taken.

In other cases, depending on the configuration, control information may be provided to a computing device to be outputted to a user, for example on a computer display, or audibly via a speaker, and so on. A user may then take one or more actions in response to the outputted control information in relation to the operation and/or charging of an EV. An example of an action taken by a user includes providing input to the same computing device or to a different computing device, where the input may initiate some action by an EV or charging infrastructure. An example of another action taken by a user may be to operate an EV in a manner indicated by the outputted control information, for example to charge the EV at a specific charger or at a charger in a specific geographic area, and/or at a specific time/date, to drive the EV on a specific route, and so on.

In at least some embodiments, control information may include control for charging infrastructure, such as chargers. There may be some EVs plugged into chargers, whether at an EV fleet depot or elsewhere. Some EVs may be charging while other EVs may not be charging. Control information may provide control to EVs and/or chargers to control aspects of charging, such as starting charging, stopping charging, times for starting or stopping charging, charging rates (for example amperage, etc.), and so on. Such control may be used, for example, to charge EVs at desirable times such as during low trip demand, or to charge EVs prior to a period of high demand to increase the availability of EVs to meet the demand, and so on.

The control information may comprise instructions to be followed, suggestions to be considered, and/or options or other parameters that may be selected, toggled, adjusted, inputted, and so on. An example of a suggestion may be one that indicates the availability of a nearby charger, or a suggested route to a destination. An example of options may be a listing of multiple nearby available chargers, or multiple routes to a destination. In some cases, control information may comprise any combination of various types of control information according to the present disclosure.

An optimizer may perform optimizations in relation to providing control in relation to the EV fleet. An optimization is generally performed in relation to one or more objectives, and the optimization may determine optimal or efficient actions for the EVs, the EV charging infrastructure, or any other assets related to the fleet.

In general, an optimization problem is typically defined by one or more decision variables, one or more objective functions, and possibly constraints and bounds on the decision variables. A solution to an optimization problem typically consists of numerical value(s) decided upon, by means of optimization, for each decision variable. The results of an optimization may be, or may be used to generate, the control information.

In at least some embodiments, the optimizer may perform multi-objective optimization where the objectives are conflicting, in which case it may enable operator(s) to choose which of the objectives should be favored by the optimization and by how much, or the objectives may be multiplied by subjective weightings and consolidated (for example summed).

Some example types of optimization objectives that may be used in relation to operations of an EV fleet include minimizing the use of public chargers or fast chargers, minimizing trip wait times for customers, maximizing the use of EVs over ICEVs, maximizing distance driven by EVs, minimizing EV battery degradation, minimizing greenhouse gas emissions due to EV charging or ICEV use, maximizing the distance driven by EVs compared ICEVs, minimizing EV idle time, minimizing ICEV use or distance driven to compensate for unavailable EVs, maximizing the number of EV trips fulfilled, maximizing revenue or profit for the fleet or individual EVs or drivers, minimizing use of higher cost chargers, maximizing EV trip activity (for example in terms of one or more of EV trip count, total distance traveled by EVs, and total travel time of EVs), maximizing commissions for drivers, minimizing energy costs, minimizing time for return-on-investment to be achieved for assets, and so on. A meaning of "higher cost" chargers may be defined in a system in any suitable way. In an example, the definition may include one or more categories of chargers, such as public chargers, or fast chargers, and/or may include parameters or thresholds relating to charging costs.

Optimizer or controller 304 may take in parameters or other configuration information (in addition to its input data) that may define, constrain, or otherwise influence the function of the optimizer or controller. Example types of configuration information include one or more SOC thresholds that may be used in deciding which EVs need to charge and such thresholds may be set based on current or predicted trip demand.

In at least some embodiments, optimizer 304 may simulate multiple scenarios of what may be expected to occur, for example in a short-term future (for example the next six hours) depending on decisions optimizer 304 may make, with a hypothetical scenario to evaluate for each of a set of possible decision outcomes. Optimizer 304 may select an option with the best simulated outcome in terms of some metrics aligned with an optimization objective. Optimizer 304 may not necessarily simulate the outcome of every possible decision, for example if such simulations would be computationally undesirable in terms of computing time or computing resources required. To account for statistical uncertainty, each simulation may be a Monte Carlo simulation, in which multiple simulations are run with a degree of randomness.

An optimizer may be implemented using any suitable techniques, for example one or more of machine learning (including reinforcement learning (RL)), rule-based approaches, mathematical optimization, or on any other suitable approaches.

In at least some embodiments, control information comprising indications of when to charge and at which chargers may be determined not only by ranking chargers not only by their proximity to an EV deemed in need of charging, but also by ranking the chargers by the current or predicted demand for trips in their vicinity. This may be as simple as the demand when the control information is issued for the EV, or more usefully the demand predicted for the time when the EV is expected to be sufficiently charged.

In at least some embodiments, control information comprising indications of specific EVs to charge in certain time intervals may be determined by solving a scheduling-type optimization problem in a receding-horizon scheme. The decision variables may specify, for each EV, whether to charge in each time interval, knowing that trips can be fulfilled in the other time intervals only, where the time intervals range from the current time until a horizon. The optimization objective may be to maximize the total number of trips expected to be fulfilled within that timespan, maximize the trip revenue earned, etc. based on predicted trip demand. SoC increases and decreases may be incurred in each time interval during which an EV is scheduled to charge and fulfill a trip, respectively and in proportion to the respective rates of energy use. Such a method may employ the concept of Special Ordered Sets (SOSs) to ensure that each EV charges and/or fulfills trips for contiguous stretch(es) of time.

Input to controller 304 or optimizer may include any suitable types of information, for example EV information which may include information relating to the EV fleet and individual EVs (which may include status information, properties or characteristics of EVs, etc.), information relating to EV chargers (such as locations, geographic areas in which they are located, status information, etc.), information relating to ongoing and/or historical fleet service activities (for example requested trips, current trips, completed trips, etc.), prediction information (for example from predictor 306, from external sources, or from anywhere else, etc.).

Information relating to individual EVs may include its EV-equivalent fuel economy (kWh per km), battery capacity (kWh), charging power limit (kW), any other types of EV telemetry data, vehicle type (for example pure electric, hybrid, plug-in hybrid, sedan, van, passenger capacity, and so on) and so on. State information relating to EVs at any given time may include SOC of the EV, geographical coordinates or other location information, EV speed, EV direction of travel, whether the EV is considered in-service (for example conducting a trip), whether the EV is plugged-in to a charger, if the EV is idle, if the EV is unavailable (for example the driving is not working), which driver is using the EV, and so on. In addition, state information may include information relating to whether an EV is in active service. For example, controller 304 may not generate an indication for an EV to charge when the EV is parked and has been idle for at least some predefined time period, for example because the driver is off duty. In addition, controller 304 may not generate an indication that would interrupt an ongoing or imminent trip unless absolutely necessary. EV service status may be estimated based on the location and activities of the EV, for example as assessed through information available from the telematics connection. Such information may include information relating to EV location, speed, SOC, whether the EV is plugged into a charger, or such information may be collected by the system through user interactions or through integration with other fleet systems, for example dispatch software.

Information relating to EV chargers may include charger geographical coordinates or other location information, number of chargers (for example in a region or in each of several areas in a region), charger type, number of connectors at a charger, charger power or charging limits, and so on. State information relating to chargers may include if the charger is in service, number of chargers or connectors available versus in-use, and so on.

Other example types of input information to controller 304 may include cost of charging power, which may be based on time of use or on demand on the electric grid for power, current and/or predicted weather information, current and/or predicted traffic information, information relating to the electrical grid, Geographic Information System (GIS) information or other mapping data, environmental data, contextual data, and so on.

Input to the system may comprise one or more of current (live or real-time) information, historical information, and predicted information.

In at least some embodiments, feedback information may be provided to fleet control system 302 in response to control information provided by the fleet control system 302. For example, feedback information associated with specific EVs may be generated and provided to fleet control system 302. Feedback information may comprise any suitable type of information, for example an indication of whether an EV has complied with an action or recommended provided by the fleet control system 302 with prior control information. Feedback information may comprise an indication of a level of compliance with prior control information. A level of compliance may be full compliance, no compliance, or partial compliance. In addition, the feedback may be associated with specific actions or recommendations in the control information, for example when control information includes multiple actions or recommendations for an EV. For example, an EV may receive an indication to charge immediately and at a certain charger or within a certain geographic area. Feedback information may indicate that the EV has started charging immediately but that the EV is charging at a different charger than the one specified in the control information. This may be considered partial compliance. Feedback information may be generated automatically based on actions taken by the EV. For example, if an indication to start charging is received but the EV does not start charging within some defined period of time, the EV may generate feedback information indicating the EV has not complied. In addition, feedback information may be generated in response to driver input. For example, a driver may input feedback into a computing device associated with the EV, for instance in response to an indication received from the fleet control system. For instance, an EV may receive an indication to accept a specific trip and the driver accepts, feedback information may be generated indicating the EV has accepted the trip.

Feedback information may be stored as data, which may be useful to a fleet operator. In some embodiments, feedback information may be used by the fleet control system 302. For example, generating control information may be performed based on the feedback information. An example of this is a "cooldown period" during which the system may wait before issuing any further control information so as to maintain user satisfaction. Another example is taking negative feedback to indicate that a recommended charger (for example, a public charger) is not allowed to be used by the fleet or is currently occupied. Yet another example is using positive and negative feedback as rewards and penalties for training an RL-based controller. The feedback information may provide useful information on the status of some EVs, for instance if an EV accepted or refused an indication for the EV to charge immediately, and so on.

In addition, in at least some embodiments, fleet control system 302 may monitor and take into account a known or predicted probability of voluntary compliance with actions or recommendations, for example when considering the expected response of the fleet to its decisions. Such information may be useful when performing control optimizations or other control actions by the fleet control system 302.

In at least some embodiments, fleet control system 302 may have an enforcement mechanism for attempting to enforce control information provided to EVs or other assets. For example, fleet system 302 may attempt to enforce compliance with control information through actions that attempt to influence the behavior of a target actor, which may be the driver of an EV. For instance, fleet system 302 may cause a taxi meter or a computing device taxi application needed by EVs in the fleet to be limited or disabled in response to the EV not complying with an action or recommendation in received control information.

EV telematics service 334 may obtain and collect telemetry data from EVs, for example over wireless communications or otherwise. This data may be provided to or obtained by fleet control system 302.

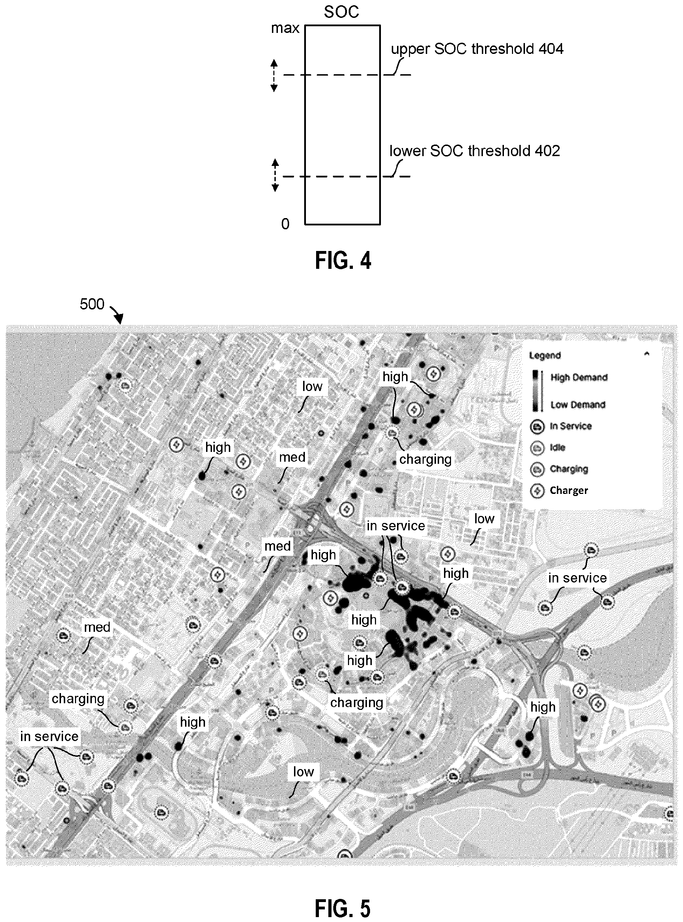

EV fleet control system 302 may comprise or communicate with one or more computing devices 394, for example to enable system 302 to be set up and configured, for other information to be inputted to system 302, or for displaying any suitable information relating to system 302 or greater system 300. Displayed information may be in the form of graphical user interfaces, and may for example include information such as that shown in FIGS. 5-7 or any other information.

An example implementation is now described in the context of a taxi fleet having EVs.

A system may be configured to generate control information at numerous points in time, for example frequently or regularly, for providing control in relation to operations of the taxi fleet. The system may be configured to provide control in relation to the charging of EV taxis and to perform optimizations to maximize, for example, the revenue or profit earned by the taxis. In other embodiments, other objectives may be used. In this example, the system functions without any direct interaction or communication with any EV chargers, allowing the system to be deployed without strict dependence on compatibility with a given class(es) of charging infrastructure. The system may comprise one or more of: cloud-based software comprising a predictor generating prediction information relating to customer trip demand in an operating region of the taxi fleet, an optimizer that determines optimal times and possibly locations for the EV taxis to charge to maximize their availability for taxi service, and dashboards to provide information about the fleet's status and recommendations for optimized charging actions to a fleet dispatcher. EV location information and taxi SOC information may be collected periodically, for example via a telematics service that may communicate directly with the EV taxis, for example through their EV onboard cellular modems or other communications equipment.

Optimized control information comprising charging instructions may be automatically transmitted to computing devices associated with the EV taxis, such as to drivers' mobile devices or devices in the EVs. The control information may be communicated in any suitable way, for example through integration with a web-based messenger service (for example Whatsapp^{™}), SMS messaging, integration with an application running on a mobile device in the EV, or other methods of electronic communication. Alternatively or additionally, control information may be provided to a fleet dispatcher system or other actor or device or system within the fleet organization, to then be communicated to the relevant EV taxi through other means.

Features of the example are now described with reference to FIG. 3. Information about taxis may be taken in through an EV telematics service 346, which may include, for example, one or more of taxi location, SOC information, and charger connection status (for example whether EVs are plugged into chargers). Current service status may be represented as a property of each taxi in the system, and may be collected through an integration with a fleet operator database 344 linked to a dispatch system 342 used by the fleet.

One or more of information and states of the taxis, charger locations, trips and so on may be provided as necessary to a predictor 306, for example to predict trip demand, and/or to an optimizer 304. In addition, the predictor 306 may generate trip demand prediction information which may be subsequently provided to the optimizer 304. In addition, the optimizer 304 may take as input parameters and/or configuration information (for example SOC thresholds in terms of trip demand), and using its inputs it may generate control information comprising charging recommendations, for example on whether each EV taxi should charge and, if so, potentially at which charger, charging site, or geographic area in the operating region. The optimizer 304 may run iteratively, producing its decisions at different points in time, and the decisions may include when to charge based on the time at which an iteration of the optimizer is run.

The predictor 306 and optimizer 304 in the example are described in more detail as follows. Other embodiments of the system may include specific information about when to charge at a future time as a component of the control information produced.

In addition, in this example, a predictor is configured to predict customer trip demand for taxi service. The demand may be expressed in any suitable way, for example as an expected revenue per unit area per unit time, as a function of location within the operating territory of the fleet, and time. Although, in other embodiments, demand may be expressed or represented in a different manner. These predictions are generated and provided to the optimizer.

The predictions may be based on taxi trips that are generated from actual historical taxi trips fulfilled by the taxi fleet, and may be scaled to model potential demand that went unfulfilled by the EVs in the fleet. In this example, predictions are made every hour with a 1-hour resolution and a 6-hour time horizon. However, in other embodiments, predictions may be performed at any other times or intervals, and may be done with any other horizon duration or length. The predictor may use a persistence model. For example, the system may model 24-hour demand trends associated with a given day of the week, and may use the same model to describe demand for different days that display similar patterns. For example, it may match Saturdays with previous Saturdays, Sundays with previous Sundays, and weekdays with any previous weekday. In terms of time-of-day rules, the system may match each hour of a day with the same hour of a previous day. Furthermore, the predictions may be broken down into multiple geographic areas containing trip start and end locations, in this example 181 geographic areas, within the region(s) served by the taxi fleet. The predictor may be configured with the coordinate centers of each geographic area by which the predictions are subdivided.

Furthermore, in this example, the optimizer may use as input one or more of the following. Input may comprise one or more of current SOC information of EVs, geographical coordinates or other location information of each EV taxi, whether a taxi is assigned to a taxi trip, or whether a taxi is plugged-in at a charger (and at which connector at the charger). In the example, there are 187 EV taxis in the fleet.

In addition, input may comprise one or more of geographical coordinates or other location information of chargers, or whether a charger is open or has any availability (any open, unoccupied chargers). In the example, there are 208 chargers with 301 connectors among them.

In addition, input may comprise trip demand information, for example trip demand prediction information provided by the predictor.

The optimizer or controller may generate and output recommendations, for EVs deemed to need charging, for specific chargers or specific geographic areas in which to charge for some or all of the taxis. A recommendation may include whether it needs to stop charging to resume active service.

The optimizer in this example uses trip demand predictions provided by the predictor. A decision of whether a taxi needs to be charging may be based on upper and/or lower SOC thresholds, which may be parameterized by predicted demand for trips.

**FIG. 4** is a diagram representing a SOC of a battery of an EV and indicating lower and upper SOC thresholds. The bottom of the diagram is labeled '0' representing no charge and the top of the diagram is labeled 'max' representing a full charge of the battery of an EV. Dashed line 402 represents a lower SOC threshold while dashed line 404 represents an upper SOC threshold.

A SOC of a battery, or of a battery cell, generally refers to an energy level that is currently available from the battery as a function or percentage of the maximum capacity of the battery. Thus, the SOC value typically varies between 0% and 100%. A battery is said to be fully charged when the SOC is at 100%, and a battery is said to be completely discharged when the SOC is 0%. An absolute (meaning not a ratio) amount of remaining energy in a battery may be calculated by multiplying the SOC value against the maximum capacity of the battery.

In the present disclosure, examples are described that use or predict SOC information of a battery of an EV. SOC information associated with an EV is not limited to SOC data, for example as expressed as a percentage or ratio of a maximum capacity of the battery, but may also include any parameter or value representing, or indicating, an energy level of a battery. For example, SOC information may comprise or consist of the energy level of a battery, which may be represented in a unit of energy (for example kWh).

Accordingly, lower and/or upper SOC thresholds may indicate or represent SOC information in any suitable way, including those described above. In some embodiments, the SOC information of EVs may be represented in the same or similar manner as upper or lower SOC thresholds for the ease of comparison.

Referring again to the example taxi implementation, if a SOC of a taxi is below the lower SOC threshold, but the taxi is not currently assigned to a trip, the system will recommend that the taxi start charging immediately and may also indicate or suggest the closest charger that is open and that has availability. If a taxi is currently assigned to a trip, for example, carrying a passenger or on its way to pick up a passenger, the system may be configured to not generate an indication for the taxi to begin charging immediately since this may not be desired, for example for the taxi to prematurely end the current trip by dropping off the passenger.

If a SOC of the taxis is above the upper SOC threshold and the taxi is currently charging, the system may generate an indication that the taxi may stop charging. In addition, in at least some embodiments, times of relatively low demand, for example fewer trips being requested on average, may be preferred for issuing charging recommendations so that taxis are sufficiently charged to be able to fulfill more trips during times of relatively high demand than they otherwise would.

Upper or lower SOC thresholds 404, 402 may be set or adjusted, for example based on actual or predicted trip information. This is represented in FIG. 4 by the double arrow ended dashed lines next to each of the thresholds 402, 404.

In the example taxi implementation, at lower demand times, the lower SOC threshold may be increased and/or the upper SOC threshold may be decreased relative to their values at higher-demand times. The result is that taxis are more likely to charge and to stay charging at lower-demand times, and less likely to charge or to stay charging at higher-demand times. The determination of what constitutes relatively low versus relatively high demand, and thus whether the optimizer recommends charging, may be performed by the different geographical areas for which the trip demand predictions are generated.

A minimum or maximum number of in-service versus charging EVs, which may also be adjusted based on current or predicted trip demand information, may be used in addition to or as an alternative to SoC thresholds. For example, at lower demand times, a minimum number of charging EVs (corresponding to a maximum number of in-service EVs) may be maintained by deciding to charge the lowest-SOC EV when an EV stops charging or deciding to stop charging the highest-SOC charging EV when an EV starts charging. Whether an EV starts (or stops) charging may be decided based on one SOC threshold.

The details of the above taxi fleet example implementation are for illustrative purposes only and thus are not limiting. In addition, the details apply more generally to EVs and fleets other than EV taxis and taxi fleets.

In at least some embodiments, the system may have one or more dashboards for other graphical user interfaces for visually displaying information and optionally receiving user input. Such interfaces may be displayed on computing devices at any suitable locations, for example at computing devices associated with EVs 332, 334, or at computing devices 394 associated with fleet control system 302.

System dashboards may include an overview of any suitable types of information, for example of fleet status, predictor outputs, or control information having action or recommendations for EVs or other assets. For example, a map displaying EV locations, charger locations, or actual and/or predicted trip demand, which may be displayed as a function of location. Other user interface elements may provide information about specific EVs including their current SOC, location, service status, and whether a charging instruction generated by the system applies to them.

Some mere examples of dashboards and other user interfaces are now discussed.

**FIG. 5** is an example heat map 500 showing predicted trip demand information, locations and service status of EVs in an on-demand fleet, and locations of chargers in the region. The example map 500 may be displayed on a graphical user display, for example on a device used by a fleet operator or on a device associated with an EV in the fleet, such as a driver's computing device (for example mobile phone) or a device on-board the EV (for example a display mounted in the EV). The example map 500 indicates in coloring or shading areas with some predicted trip demand. The coloring or shading varies with the degree of demand along a spectrum from low predicted demand to high predicted demand. Some example areas are labeled "low", "med" (medium), and "high" representing the predicted demand in those areas. In addition, the map 500 has some labels of example EVs in service and EVs charging.

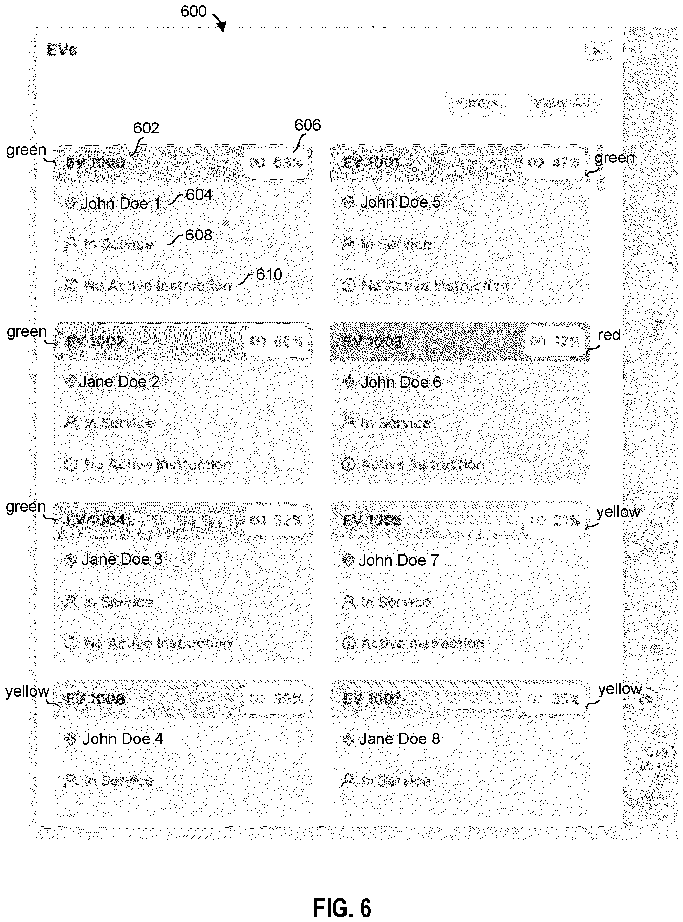

**FIG. 6** is an example graphical user display 600 showing some status information of some EVs in an on-demand fleet, including EV identification information 602, driver identification information (such as name) 604, current SOC information 606, service status information 608, and instruction status 610 (for example when to charge, where to charge, trip to accept, route to take, and so on).

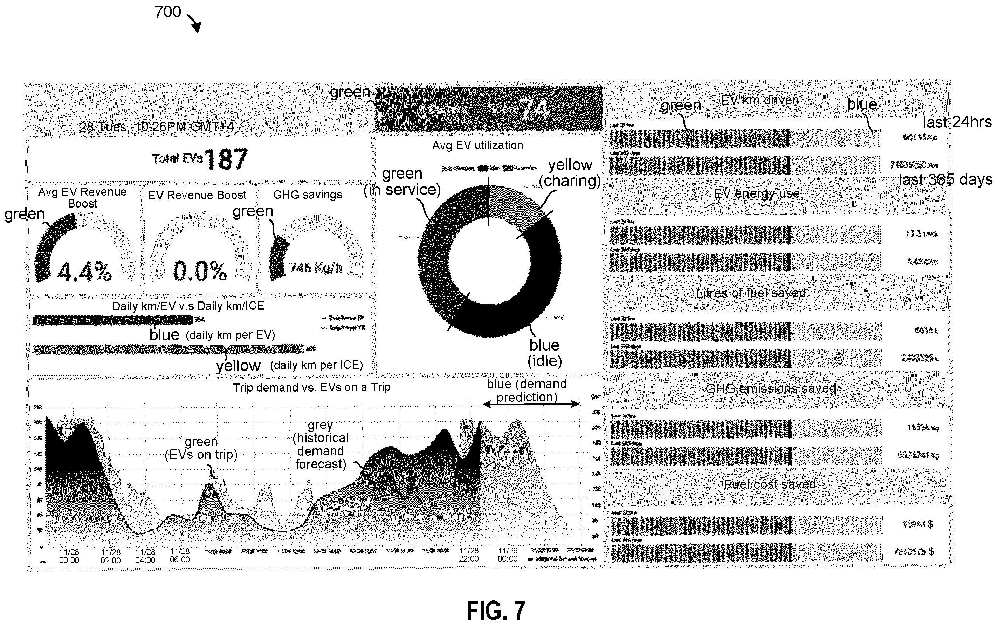

The system may track metrics related to activities of EVs in the fleet and may present a subset of these values in a dashboard or report to inform fleet operators of the performance of EVs in general (for example average daily distance, average energy consumption, etc.), the EVs relative to the ICEVs in the fleet (for example relative daily distance, estimated greenhouse gas emissions offset by EV operations, etc.), or the performance of the system itself in its optimization of EV operations (for example estimated additional revenue or profit per EV, estimated reduction in ICEV distance driven to cover for unavailable EVs, etc.). An example of such a user interface is shown in FIG. 7.

**FIG. 7** is an example graphical user display 700 showing some status and statistical information relating to EVs in an on-demand fleet. The information may include current and recent performance metrics for the EV fleet and optimization system. Example types of information that are shown include number of EVs in the fleet, EV revenue boost, greenhouse gas emissions savings, average EV utilization, trip demand compared to number of EVs on a trip, and other data over both the past 24 hour period and last 365 days period such as EV kms driven, EV energy use, litres of fuel saved, GHG emissions saved, and fuel costs saved.

Some features and embodiments are described with EVs having drivers. A driver may be a human but may alternatively be a computing system, or some combination of both. Thus, references to a "driver" are not necessarily limited to humans, but may refer to a computing system capable of driving a vehicle.

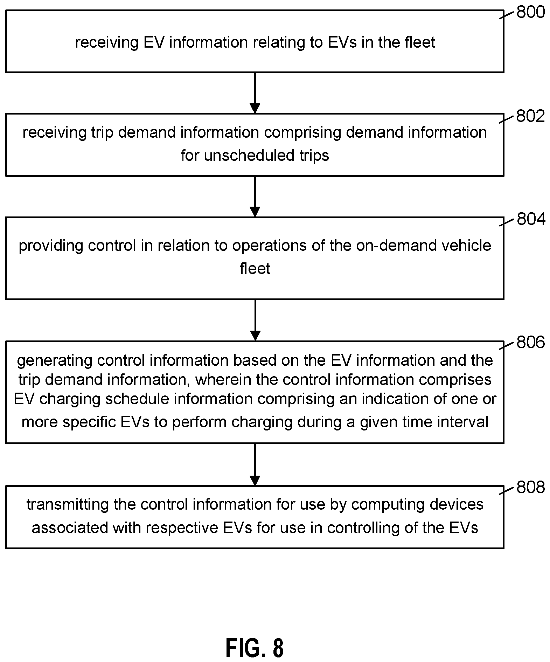

**FIG. 8** is a process flow diagram of an example method. The example method may be performed at or by one or more electronic devices each having one or more computer processors and computer-readable memory. The method may provide control in relation to operations of an on-demand EV fleet. In particular, the method may relate to providing control in relation to operations of an on-demand vehicle fleet comprising at least a plurality of electric vehicles (EVs), wherein the on-demand vehicle fleet receives requests for at least some trips that are unscheduled.

At block 800, the method comprises receiving EV information relating to EVs in the fleet. The method may be performed at one or more electronic devices each having one or more processors and computer-readable memory, to provide control in relation to operations of an on-demand vehicle fleet comprising at least a plurality of electric vehicles (EVs), wherein the on-demand vehicle fleet receives requests for at least some trips that are unscheduled.

At block 802, the method comprises receiving trip demand information comprising demand information for unscheduled trips.

At block 804, the method comprises providing control in relation to operations of the on-demand vehicle fleet.

At block 806, the method comprises generating control information based on the EV information and the trip demand information, wherein the control information comprises EV charging schedule information comprising an indication of one or more specific EVs to perform charging during a given time interval.

At block 808, transmitting the control information for use by computing devices associated with respective EVs for use in controlling of the EVs.

In some embodiments, algorithms, techniques, and/or approaches according to the present disclosure may be performed or based on artificial intelligence (Al) algorithms, techniques, and/or approaches. This includes but is not limited to predictors and/or optimizers according to the present disclosure, as well as controlling of EVs or other controllable assets, for example EV charging architecture, EV charges, and so on.

In some embodiments, the Al algorithms and techniques may include machine learning techniques.

Machine Learning (ML) may be used in one or more aspects of an EV fleet control system according to the present disclosure. Machine learning systems or models may be used to predict information such as trip demand, EV energy required to conduct specific trips, EV battery SOC information, energy prices, weather information, traffic information, power availability (for example from a grid or renewable sources), other customer demand, electricity demand, and so on. Machine learning models may be used to generate control information for providing control in relation to assets in a system, for instance using one or more optimizations. Predictors may be used to control or schedule, for example, whether, how and/or when EVs are charged, EV routes, assignment of EVs to specific regions and/or routes, and so on. Machine learning models may be generated and used to optimize or otherwise calculate in relation to one or more objectives according to the present disclosure, for example minimizing the use of public chargers or fast chargers, minimizing trip wait times for customers, maximizing distance driven by EVs, maximizing the number of EV trips fulfilled, maximizing revenue or profit for the fleet or individual EVs or drivers, minimizing use of higher cost chargers, and so on.

A machine learning algorithm or system may receive data, for example historical data, streaming controllable asset data, environmental data, and/or third party data, and, using one or more suitable machine learning algorithms, may generate one or more datasets. Example types of machine learning algorithms include but are not limited to supervised learning algorithms, unsupervised learning algorithms, reinforcement learning algorithms, semi-supervised learning algorithms (for example where both labeled and unlabeled data is used), regression algorithms (for example logistic regression, linear regression, and so forth), regularization algorithms (for example least-angle regression, ridge regression, and so forth), artificial neural network algorithms, instance based algorithms (for example locally weighted learning, learning vector quantization, and so forth), Bayesian algorithms, decision tree algorithms, clustering algorithms, and so forth. Further, other machine learning algorithms may be used additionally or alternatively. In some embodiments, a machine learning algorithm or system may analyze data to identify patterns and/or sequences of activity, and so forth, to generate one or more datasets.

An EV fleet control system may comprise one or more control policies. The control policies of the system may be based on trained machine learning based systems. In this sense, a control policy may be part of a controller or control agent. A control agent observes its environment, which may be referred to as a control environment, and takes action based on its observations, or percepts, of the control environment. The taking of action is referred to as controlling the system. Depending on the state of the environment, taking action may involve taking no action at all with respect to the system outputs, for example if there has been little or no change in the state since the last time the agent took action. Thus, doing nothing (not updating any setpoints, etc.) is a valid action in a set of actions in the action space of the controller. In an embodiment, the present systems and methods may exploit the flexibility of controllable assets in the system to achieve improved performance of the system. For example, the flexibility of controllable assets may be exploited in response to changes in the control environment.

In an embodiment, online machine learning may be employed. Online machine learning is a technique of machine learning where data becomes available sequentially over time. The data is utilized to update a predictor for future data at each step in time (for example time slot). This approach of online machine learning may be contrasted to approaches that use batch learning wherein learning performed on an entire or subset of training data set. Online machine learning is sometimes useful where the data varies significantly over time, such as in power or energy pricing, commodity pricing, and stock markets. Further, online machine learning may be helpful when it is not practical or possible to train the agent over the entirety or a subset of a data set.

In embodiments according to the present disclosure, training of a machine learning system, such as a predictor or optimizer, may be based on offline learning and/or online learning where streaming real-time data may be combined with at least some data, for example from a database to train the machine learning system in real-time or near real-time. Over time, a machine learning system may be retrained, for example with newer or different training data.

The concept of explainable Al is gaining increasing popularity in Al software systems, such as those using ML or RL techniques, and particularly where the Al model is a "black box" such as whose inner workings are difficult to understand or explain, especially to a layperson. This may apply to at least some of the methods and systems according to the present disclosure that employ Al techniques such as ML, for example as an ML- or RL-based optimizer. That being said, the concept of explainable Al may be generalized to being able to explain software systems' actions to those affected by them (for example, users of the system), whether the action is based on AI or not. For example, if the system is being used for multi-objective optimization wherein different, conflicting sub-objectives culminate into one, overall objective to which the optimization is applied, then the numerical weightings with which the sub-objectives may be combined can help explain the optimizer's action according to those weightings. This may notably include soft constraints which are factored into the overall objective as sub-objectives. For example, if a fleet operator assigned a high weighting to minimizing GHG emissions and a low weighting to minimizing energy cost (thereby prioritizing the former objective over the latter), and the current availability of renewable energy is low, then operators and other system users being made readily aware of such facts would aid in the overall understanding, trust, and adoption of such systems.

An EV fleet control system according to the present disclosure may include or be implemented with cloud-based or local computing systems. Cloud-based or local data storage housing information relevant to the fleet or operation of the system. Software integrations connecting the system with fleet hardware, equipment, or assets, and/or fleet software systems (for example user interfaces). User interface(s), which may include dashboards for visually displaying relevant information, supporting user interactions with the software system. Channels for the intake of relevant data from, and transmission of instructions to, drivers or other revenue fleet staff (for example, using the aforementioned hardware and/or user interfaces). Software modules and channels for intake of relevant data from sources other than drivers and other revenue fleet staff (for example, weather forecasts). Software-based predictors that forecast values of variables relevant to the optimization of the fleet's energy-related fleet operations. Software-based optimizers to determine optimal values of one or more controllable decision variables (i.e., control outputs) relevant to the fleet's operation, possibly using outputs of predictor(s) and information about the state of the fleet. Channels or integrations for connecting the revenue fleet energy use to energy market entities for participation in revenue or discount programs based on the fleet's energy use patterns. Simulated assets generated by the software system for model training, testing, and scenario evaluation.

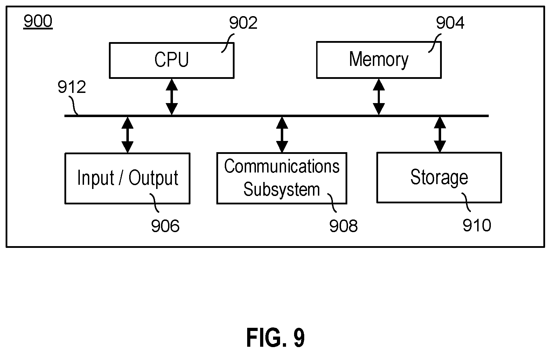

**FIG. 9** is a block diagram of an example computerized device or system 900 that may be used in implementing one or more aspects or components of an embodiment according to the present disclosure. For example, system 900 may be used to implement a computing device or system, such as a fleet control system, an optimizer, a predictor, a controller, and so on, to be used with a device, system or method according to the present disclosure. Thus, one or more systems 900 may be configured to implement one or more portions of the systems or apparatuses or methods according to the present disclosure.

Computerized system 900 may comprise one or more of classic, analog, electronic, digital, and quantum computing technologies. Computerized system 900 may include one or more of a computer processor device 902, memory 904, a mass storage device 910, an input/output (I/O) interface 906, and a communications subsystem 908. A computer processor device may be any suitable device(s), and encompasses various devices, systems, and apparatus for processing data and instructions. These include, as examples only, one or more of a hardware processor, a digital processor, an electronic processor, a quantum processor, a programmable processor, a computer, a system on a chip, and special purpose logic circuitry such as an ASIC (application-specific integrated circuit) and/or FPGA (field programmable gate array). In addition, system 900 may include hardware dedicated to one or more specific purposes, such as a graphics processing unit (GPU), or a tensor processing unit (TPU) or other artificial intelligence accelerator ASIC, for example for ML.

Memory 904 may be configured to store computer readable instructions, that when executed by processor 902, cause the performance of operations, including operations in accordance with the present disclosure.

One or more of the components or subsystems of computerized system 900 may be interconnected by way of one or more buses 912 or in any other suitable manner.

The bus 912 may be one or more of any type of several bus architectures including a memory bus, storage bus, memory controller bus, peripheral bus, or the like. The processor 902 may comprise any type of electronic data processor. The memory 904 may comprise any type of system memory such as dynamic random access memory (DRAM), static random access memory (SRAM), synchronous DRAM (SDRAM), read-only memory (ROM), a combination thereof, or the like. In an embodiment, the memory may include ROM for use at boot-up, and DRAM for program and data storage for use while executing programs.

The mass storage device 910 may comprise any type of storage device configured to store data, programs, and other information and to make the data, programs, and other information accessible via the bus 912. The storage device may be adapted to store one or more databases and/or data repositories, each of which is generally an organized collection of data or other information stored and accessed electronically via a computer. The term database or repository may thus refer to a storage device comprising a database. The mass storage device 910 may comprise one or more of a solid state drive, hard disk drive, a magnetic disk drive, an optical disk drive, or the like. In some embodiments, data, programs, or other information may be stored remotely, for example in the cloud. Computerized system 900 may send or receive information to the remote storage in any suitable way, including via communications subsystem 908 over a network or other data communication medium.

The I/O interface 906 may provide interfaces for enabling wired and/or wireless communications between computerized system 900 and one or more other devices or systems, such as a fleet control system according to the present disclosure. Furthermore, additional or fewer interfaces may be utilized. For example, one or more serial interfaces such as Universal Serial Bus (USB) (not shown) may be provided. Further, system 900 may comprise or be communicatively connectable to a display device, and/or speaker device, a microphone device, an input device such as a keyboard, button, pointer, mouse, touch screen display, microphone, camera, scanner, or any other type of input device.

Computerized system 900 may be used to configure, operate, control, monitor, sense, and/or adjust devices, systems, and/or methods according to the present disclosure.

A communications subsystem 908 may be provided for one or both of transmitting and receiving signals over any form or medium of digital data communication, including a communication network. Examples of communication networks include a local area network (LAN), a wide area network (WAN), telecommunications network, cellular network, an inter-network such as the Internet, and peer-to-peer networks such as ad hoc peer-to-peer networks. Communications subsystem 908 may include any component or collection of components for enabling communications over one or more wired and wireless interfaces. These interfaces may include but are not limited to USB, Ethernet (for example IEEE 802.3), high-definition multimedia interface (HDMI), Firewire^{™} (for example IEEE 1374), Thunderbolt^{™}, WiFi^{™} (for example IEEE 802.11), WiMAX (for example IEEE 802.16), Bluetooth^{™}, or Near-field communications (NFC), as well as General Packet Radio Service (GPRS), Universal Mobile Telecommunications System (UMTS), Long-Term Evolution (LTE), LTE-A, 5G NR (New Radio), satellite communication protocols, and dedicated short range communication (DSRC). Communication subsystem 908 may include one or more ports or other components (not shown) for one or more wired connections. Additionally or alternatively, communication subsystem 908 may include one or more transmitters, receivers, and/or antenna elements (none of which are shown). Further, system 900 may comprise clients and servers.

Computerized system 900 of FIG. 9 is merely an example and is not meant to be limiting. Various embodiments may utilize some or all of the components shown or described. Some embodiments may use other components not shown or described but known to persons skilled in the art.

Logical operations of the various embodiments according to the present disclosure may be implemented as (i) a sequence of computer implemented steps, procedures, or operations running on a programmable circuit in a computer, (ii) a sequence of computer implemented operations, procedures, or steps running on a specific-use programmable circuit; and/or (iii) interconnected machine modules or program engines within the programmable circuits. The computerized device or system 900 of FIG. 9 may practice all or part of the recited methods or operations, may be a part of systems according to the present disclosure, and/or may operate according to instructions in computer-readable storage media. Such logical operations may be implemented as modules configured to control a computer processor, such as processor 902, to perform particular functions according to the programming of the module. In other words, a computer processor, such as processor 902, may execute the instructions, steps, or operations according to the present disclosure, including of the one or more of the blocks or modules. For example, one or more of the modules or blocks in FIGS. 2-3 may be configured to control processor 902. For example, the modules or blocks in FIGS. 2-3 may include but are not limited to, for example, fleet control system 202, 302, an optimizer, predictors, and so on. At least some of these blocks or modules may be stored on storage device 910 and loaded into memory 904 at runtime or may be stored in other computer-readable memory locations.

The concepts of real-time and near real-time may be defined as providing a response or output within a pre-determined time interval, usually a relatively short time. A time interval for real-time is generally shorter than an interval for near real-time. Mere non-limiting examples of predetermined time intervals may include the following as well as values below, between, and/or above these figures: 10 s, 60 s, 5 min, 10 min, 20 min, 30 min, 60 min, 2 hr, 4 hr, 6 hr, 8 hr, 10 hr, 12 hr, 1 day.

The term module used herein may refer to a software module, a hardware module, or a module comprising both software and hardware. Generally, software includes computer executable instructions, and possibly also data, and hardware refers to physical computer hardware.

The term `data' generally refers to raw or unorganized facts whereas 'information' generally refers to processed or organized data. However, the terms are generally used synonymously herein unless indicated otherwise.

Embodiments, components, subsystems, and operations according to the present disclosure may be implemented in digital electronic circuitry, and/or in computer software, firmware, and/or hardware, including structures according to this disclosure and their structural equivalents. Embodiments and operations according to the present disclosure may be implemented as one or more computer programs, for example one or more modules of computer program instructions, stored on or in computer storage media for execution by, or to control the operation of, one or more computer processing devices such as a processor. Operations according to the present disclosure may be implemented as operations performed by one or more processing devices on data stored on one or more computer-readable storage devices or media, and/or received from other sources.

In the preceding description, for purposes of explanation, numerous details are set forth in order to provide a thorough understanding of the embodiments. However, it will be apparent to one skilled in the art that these specific details are not required. In other instances, well-known electrical structures and circuits are shown in block diagram form in order not to obscure the understanding. For example, specific details are not necessarily provided as to whether the embodiments described herein are implemented as a computer software, computer hardware, electronic hardware, or a combination thereof.

In at least some embodiments, one or more aspects or components may be implemented by one or more special-purpose computing devices. The special-purpose computing devices may be any suitable type of computing device, including desktop computers, portable computers, handheld computing devices, networking devices, or any other computing device that comprises hardwired and/or program logic to implement operations and features according to the present disclosure.

Embodiments of the disclosure may be represented as a computer program product stored in a machine-readable medium (also referred to as a computer-readable medium, a processor-readable medium, or a computer usable medium having a computer-readable program code embodied therein). The machine-readable medium may be any suitable tangible, non-transitory medium, including magnetic, optical, or electrical storage medium including a diskette, compact disk read only memory (CD-ROM), memory device (volatile or non-volatile), or similar storage mechanism. The machine-readable medium may contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations may also be stored on the machine-readable medium. The instructions stored on the machine-readable medium may be executed by a processor or other suitable processing device, and may interface with circuitry to perform the described tasks.

The structure, features, accessories, and/or alternatives of embodiments described and/or shown herein, including one or more aspects thereof, are intended to apply generally to all of the teachings of the present disclosure, including to all of the embodiments described and illustrated herein, insofar as they are compatible. Thus, the present disclosure includes embodiments having any combination or permutation of features of embodiments or aspects herein described.

In addition, the steps and the ordering of the steps of methods and data flows described and/or illustrated herein are not meant to be limiting. Methods and data flows comprising different steps, different number of steps, and/or different ordering of steps are also contemplated. Furthermore, although some steps are shown as being performed consecutively or concurrently, in other embodiments these steps may be performed concurrently or consecutively, respectively.

For simplicity and clarity of illustration, reference numerals may have been repeated among the figures to indicate corresponding or analogous elements. Numerous details have been set forth to provide an understanding of the embodiments described herein. The embodiments may be practiced without these details. In other instances, well-known methods, procedures, and components have not been described in detail to avoid obscuring the embodiments described.

The embodiments according to the present disclosure are intended to be examples only. Alterations, modifications and variations may be effected to the particular embodiments by those of skill in the art without departing from the scope, which is defined solely by the claims appended hereto.

Terms such as "comprising", "comprises", "including," "includes," "having," "has," "with," and variants thereof as used herein generally mean includes but not necessarily limited to. The terms "a" or "an" are generally used to mean one or more than one. Furthermore, the term "or" is used in a non-exclusive manner, meaning that "A or B" includes "A but not B," "B but not A," and "both A and B" unless otherwise indicated. In addition, the terms "first," "second," and "third," and so on, are used only as labels for descriptive purposes, and are not intended to impose numerical requirements or any specific ordering on their objects.

The following example clauses describe further example aspects, embodiments, and/or features according to the present disclosure. While the clauses describe systems, they are intended and thus include corresponding methods and corresponding non-transitory computer-readable media having computer-readable instructions stored thereon.

Clause 1. A system comprising: a computer-readable storage medium having executable instructions; and one or more computer processors configured to execute the instructions to provide control in relation to operations of an on-demand vehicle fleet comprising at least a plurality of electric vehicles (EVs), wherein the on-demand vehicle fleet receives requests for at least some trips that are unscheduled, the instructions to: receive EV information relating to EVs in the fleet; receive trip demand information comprising demand information for unscheduled trips; and provide control in relation to operations of the on-demand vehicle fleet, wherein the providing control comprises: generating control information based on the EV information and the trip demand information, wherein the control information comprises EV charging schedule information comprising an indication of one or more specific EVs to perform charging during a given time interval; and transmitting the control information for use by computing devices associated with respective EVs for use in controlling of the EVs.

Clause 2. A system according to any one of the other clauses, wherein the control information comprises at least one recommended action for an EV.

Clause 3. A system according to any one of the other clauses, wherein the generating control information is further based on predicted information relating to at least one of cost of charging, revenue or profit earnable by fulfilling demand, trip quantities, trip durations, trip distances, customer wait times, energy market prices, greenhouse gas emissions.

Clause 4. A system according to any one of the other clauses, wherein the generating the control information is based on an objective comprising at least one of: minimizing wait times between trip requests and start times of respective trips; minimizing energy costs associated with the EVs; maximizing trip revenue or profit earned by EVs; minimizing use of higher cost chargers; and maximizing EV trip activity.

Clause 5. A system according to any one of the other clauses, wherein the generating control information is at least one of: rule-based, optimization-based, and/or machine-learning-based.

Clause 6. A system according to any one of the other clauses, wherein the generating control information comprises performing a receding horizon optimization for an optimization horizon having a plurality of time intervals.

Clause 7. A system according to any one of the other clauses, wherein the EV information comprises at least one of: state of charge (SOC) information relating to a battery of the EV; and location information of the EV. [e.g. SOC, location, if taxi is doing a trip, if taxi is charging/plugged-in, etc.]; information relating to EV chargers [e.g. chargers' locations, if charger is open and available, etc.]; and trip demand prediction information [e.g. number of predicted rides in next hour, predicted rides per geographic area, etc.].

Clause 8. A system according to any one of the other clauses, wherein the control information comprises an identification of which specific trips should be fulfilled by which EVs.

Clause 9. A system according to any one of the other clauses, wherein the control information comprises an identification of specific route information to be followed by an EV for a specific trip.]

Clause 10. A system according to any one of the other clauses, wherein the generating control information is further based on charger location information relating to locations of chargers, and wherein the EV charging schedule information comprises an indication of a charger location for each of at least some of the specific EVs to perform charging.

Clause 11. A system according to any one of the other clauses, wherein information regarding the state of the fleet, and predictions of the demand on the fleet include information regarding the state and activities of non-electric vehicles (such as ICE vehicles) operated either in conjunction with the EVs in the fleet (as a mixed fleet) or in a comparable operating role prior to the introduction of EVs to that role.

Clause 12. A system according to any one of the other clauses, wherein outputs of the optimizer/controller include instructions directed to or regarding the operation of non-electric vehicles in a mixed fleet.

REPRESENTATIVE FEATURES:
1. A system, comprising: a computer-readable storage medium having executable instructions; and one or more computer processors configured to execute the instructions to provide control in relation to operations of an on-demand vehicle fleet comprising at least a plurality of electric vehicles (EVs), wherein the on-demand vehicle fleet receives requests for at least some trips that are unscheduled, the instructions to: receive EV information relating to EVs in the fleet; receive trip demand information comprising demand information for unscheduled trips; and provide control in relation to operations of the on-demand vehicle fleet, wherein the providing control comprises: generating control information based on the EV information and the trip demand information, wherein the control information comprises EV charging schedule information comprising an indication of one or more specific EVs to perform charging during a given time interval; and transmitting the control information for use by computing devices associated with respective EVs for use in controlling of the EVs.
2. The system according to clause 1, wherein the control information comprises, in relation to a specific EV to perform charging during a given time interval, at least one of: an identification of a charger to use for the charging; and an identification of a geographic area in which the specific EV is to perform charging.
3. The system according to clause 1 or 2, wherein the instructions are further to: receive or generate prediction information relating to a predicted amount of energy required for an EV to complete a specific trip; assess whether the EV has sufficient energy to complete the trip based on SOC information of the EV; and generate in response to an assessment that the EV does not have sufficient energy, an indication in the control information not authorizing the EV to perform the trip, and generate, in response to an assessment that the EV has sufficient energy, an indication in the control information authorizing the EV to perform the trip.
4. The system according to any one of clauses 1-3, wherein the instructions are further to set a lower state of charge (SOC) threshold based on the trip demand information, and wherein the generating control information comprises generating an indication of an EV to perform charging on the basis that a SOC of the EV is below the lower state of charge (SOC) threshold.
5. The system according to any one of clauses 1-4, wherein the instructions are further to: receive feedback information associated with one or more specific EVs in response to prior control information transmitted in association with those EVs, the feedback information comprising an indication of a level of compliance with the prior control information, and wherein the generating control information for a future time period is performed based on the feedback information.
6. The system according to any one of clauses 1-5, wherein the control information comprises an identification of a geographic area in which an EV is recommended to await a future trip.
7. The system according to any one of clauses 1-6, wherein the trip demand information includes trip demand prediction information relating to predicted trip demand.
8. The system according to any one of clauses 1-7, wherein the generating control information comprises performing a receding horizon optimization for an optimization horizon having a plurality of time intervals, wherein the given time interval of the indication is associated with one of the plurality of time intervals.
9. A method comprising: at one or more electronic devices each having one or more processors and computer-readable memory, to provide control in relation to operations of an on-demand vehicle fleet comprising at least a plurality of electric vehicles (EVs), wherein the on-demand vehicle fleet receives requests for at least some trips that are unscheduled: receiving EV information relating to EVs in the fleet; receiving trip demand information comprising demand information for unscheduled trips; and providing control in relation to operations of the on-demand vehicle fleet, wherein the providing control comprises: generating control information based on the EV information and the trip demand information, wherein the control information comprises EV charging schedule information comprising an indication of one or more specific EVs to perform charging during a given time interval; and transmitting the control information for use by computing devices associated with respective EVs for use in controlling of the EVs.
10. The method according to clause 9, wherein the control information comprises, in relation to a specific EV to perform charging during a given time interval, at least one of: an identification of a charger to use for the charging; and an identification of a geographic area in which the specific EV is to perform charging.
11. The method according to clause 9 or 10, further comprising: receiving or generating prediction information relating to a predicted amount of energy required for an EV to complete a specific trip; assessing whether the EV has sufficient energy to complete the trip based on SOC information of the EV; and generating in response to an assessment that the EV does not have sufficient energy, an indication in the control information not authorizing the EV to perform the trip, and generating, in response to an assessment that the EV has sufficient energy, an indication in the control information authorizing the EV to perform the trip.
12. The method according to any one of clauses 9-11, further comprising: setting a lower state of charge (SOC) threshold based on the trip demand information, and wherein the generating control information comprises generating an indication of an EV to perform charging on the basis that a SOC of the EV is below the lower state of charge (SOC) threshold.
13. The method according to any one of clauses 9-12, further comprising: receiving feedback information associated with one or more specific EVs in response to prior control information transmitted in association with those EVs, the feedback information comprising an indication of a level of compliance with the prior control information, and wherein the generating control information for a future time period is performed based on the feedback information.
14. The method according to any one of clauses 9-13, wherein the control information comprises an identification of a geographic area in which an EV is recommended to await a future trip.
15. The method according to any one of clauses 9-14, wherein the trip demand information includes trip demand prediction information relating to predicted trip demand.
16. The method according to any one of clauses 9-15, wherein the generating control information comprises performing a receding horizon optimization for an optimization horizon having a plurality of time intervals, wherein the given time interval of the indication is associated with one of the plurality of time intervals.
17. A non-transitory computer-readable medium having computer-readable instructions stored thereon, the computer-readable instructions executable by at least one processor to cause the performance of operations relating to providing control in relation to operations of an on-demand vehicle fleet comprising at least a plurality of electric vehicles (EVs), wherein the on-demand vehicle fleet receives requests for at least some trips that are unscheduled, the operations comprising: receiving EV information relating to EVs in the fleet; receiving trip demand information comprising demand information for unscheduled trips; and providing control in relation to operations of the on-demand vehicle fleet, wherein the providing control comprises: generating control information based on the EV information and the trip demand information, wherein the control information comprises EV charging schedule information comprising an indication of one or more specific EVs to perform charging during a given time interval; and transmitting the control information for use by computing devices associated with respective EVs for use in controlling of the EVs.
18. The non-transitory computer-readable medium according to clause 17, wherein the control information comprises, in relation to a specific EV to perform charging during a given time interval, at least one of: an identification of a charger to use for the charging; and an identification of a geographic area in which the specific EV is to perform charging.
19. The non-transitory computer-readable medium according to clause 17 or 18, the operations further comprising: receiving or generating prediction information relating to a predicted amount of energy required for an EV to complete a specific trip; assessing whether the EV has sufficient energy to complete the trip based on SOC information of the EV; and generating in response to an assessment that the EV does not have sufficient energy, an indication in the control information not authorizing the EV to perform the trip, and generating, in response to an assessment that the EV has sufficient energy, an indication in the control information authorizing the EV to perform the trip.
20. The non-transitory computer-readable medium according to any one of clauses 17-19, the operations further comprising setting a lower state of charge (SOC) threshold based on the trip demand information, and wherein the generating control information comprises generating an indication of an EV to perform charging on the basis that a SOC of the EV is below the lower state of charge (SOC) threshold.

## Claims

1. A system, comprising:
a computer-readable storage medium having executable instructions; and
one or more computer processors configured to execute the instructions to provide control in relation to operations of an on-demand vehicle fleet comprising at least a plurality of electric vehicles (EVs), wherein the on-demand vehicle fleet receives requests for at least some trips that are unscheduled, the instructions to:
receive EV information relating to EVs in the fleet;
receive trip demand information comprising demand information for unscheduled trips; and
provide control in relation to operations of the on-demand vehicle fleet, wherein the providing control comprises:
generating control information based on the EV information and the trip demand information, wherein the control information comprises EV charging schedule information comprising an indication of one or more specific EVs to perform charging during a given time interval; and
transmitting the control information for use by computing devices associated with respective EVs for use in controlling of the EVs.

2. The system according to claim 1, wherein the control information comprises, in relation to a specific EV to perform charging during a given time interval, at least one of:
an identification of a charger to use for the charging; and
an identification of a geographic area in which the specific EV is to perform charging.

3. The system according to claim 1 or 2, wherein the instructions are further to:
receive or generate prediction information relating to a predicted amount of energy required for an EV to complete a specific trip;
assess whether the EV has sufficient energy to complete the trip based on SOC information of the EV; and
generate in response to an assessment that the EV does not have sufficient energy, an indication in the control information not authorizing the EV to perform the trip, and generate, in response to an assessment that the EV has sufficient energy, an indication in the control information authorizing the EV to perform the trip.

4. The system according to any one of claims 1-3, wherein the instructions are further to set a lower state of charge (SOC) threshold based on the trip demand information, and wherein the generating control information comprises generating an indication of an EV to perform charging on the basis that a SOC of the EV is below the lower state of charge (SOC) threshold.

5. The system according to any one of claims 1-4, wherein the instructions are further to:
receive feedback information associated with one or more specific EVs in response to prior control information transmitted in association with those EVs, the feedback information comprising an indication of a level of compliance with the prior control information, and
wherein the generating control information for a future time period is performed based on the feedback information.

6. The system according to any one of claims 1-5, wherein the control information comprises an identification of a geographic area in which an EV is recommended to await a future trip.

7. The system according to any one of claims 1-6, wherein the trip demand information includes trip demand prediction information relating to predicted trip demand.

8. The system according to any one of claims 1-7, wherein the generating control information comprises performing a receding horizon optimization for an optimization horizon having a plurality of time intervals, wherein the given time interval of the indication is associated with one of the plurality of time intervals.

9. A method comprising:
at one or more electronic devices each having one or more processors and computer-readable memory, to provide control in relation to operations of an on-demand vehicle fleet comprising at least a plurality of electric vehicles (EVs), wherein the on-demand vehicle fleet receives requests for at least some trips that are unscheduled:
receiving EV information relating to EVs in the fleet;
receiving trip demand information comprising demand information for unscheduled trips; and
providing control in relation to operations of the on-demand vehicle fleet, wherein the providing control comprises:
generating control information based on the EV information and the trip demand information, wherein the control information comprises EV charging schedule information comprising an indication of one or more specific EVs to perform charging during a given time interval; and
transmitting the control information for use by computing devices associated with respective EVs for use in controlling of the EVs.

10. The method according to claim 9, wherein the control information comprises, in relation to a specific EV to perform charging during a given time interval, at least one of:
an identification of a charger to use for the charging; and
an identification of a geographic area in which the specific EV is to perform charging.

11. The method according to claim 9 or 10, further comprising:
receiving or generating prediction information relating to a predicted amount of energy required for an EV to complete a specific trip;
assessing whether the EV has sufficient energy to complete the trip based on SOC information of the EV; and
generating in response to an assessment that the EV does not have sufficient energy, an indication in the control information not authorizing the EV to perform the trip, and generating, in response to an assessment that the EV has sufficient energy, an indication in the control information authorizing the EV to perform the trip.

12. The method according to any one of claims 9-11, further comprising:
setting a lower state of charge (SOC) threshold based on the trip demand information, and wherein the generating control information comprises generating an indication of an EV to perform charging on the basis that a SOC of the EV is below the lower state of charge (SOC) threshold.

13. The method according to any one of claims 9-12, further comprising:
receiving feedback information associated with one or more specific EVs in response to prior control information transmitted in association with those EVs, the feedback information comprising an indication of a level of compliance with the prior control information, and
wherein the generating control information for a future time period is performed based on the feedback information.

14. The method according to any one of claims 9-13, wherein the control information comprises an identification of a geographic area in which an EV is recommended to await a future trip.

15. The method according to any one of claims 9-14, wherein the trip demand information includes trip demand prediction information relating to predicted trip demand.
